# EUROPEAN PATENT SPECIFICATION

(11) **EP 4 280 488 B1**
(45) Date of publication and mention of the grant of the patent: **10.12.2025**
(21) Application number: 21925224.4
(22) Date of filing: 10.02.2021
(51) Int. Cl.: H04L 47/24, H04L 47/283, H04L 47/2425, H04L 67/12

(54) **INFORMATION TRANSMISSION METHOD AND APPARATUS**
INFORMATIONSÜBERTRAGUNGSVERFAHREN UND -VORRICHTUNG
PROCÉDÉ ET APPAREIL DE TRANSMISSION D'INFORMATIONS

(43) Date of publication of application: 22.11.2023
(60) Divisional application: 25213163.6
(73) Proprietor: Shenzhen Yinwang Intelligent Technologies Co., Ltd., Shenzhen, Guangdong 518129 (CN)
(72) Inventor: LI, Chao, Shenzhen, Guangdong 518129 (CN); ZHANG, Xingxin, Shenzhen, Guangdong 518129 (CN)
(74) Representative: Pfenning, Meinig & Partner mbB
(86) International application number: PCT/CN2021/076521
(87) International publication number: WO 2022/170561

(56) References cited:
- EP-A2- 0 512 290
- CN-A- 107 258 076
- CN-A- 108 964 823
- CN-A- 112 311 496
- US-A1- 2013 016 724
- US-A1- 2013 182 704
- US-A1- 2020 153 722
- ANONYMOUS: "IP fragmentation - Wikipedia", 28 January 2021 (2021-01-28), pages 1 - 4, XP093115313, Retrieved from the Internet <URL:https://en.wikipedia.org/w/index.php?title=IP_fragmentation&oldid=1003266403> [retrieved on 20240102]

## Description

### TECHNICAL FIELD

This application relates to the field of communications technologies, and in particular, to two information transmission methods, corresponding apparatuses, computer-readable storage mediums, a vehicle, and a system.

### BACKGROUND

In a communications system, information of different service types may correspond to different sizes of data packets, and different priorities may also be configured for the information of different service types. For example, for a data frame of an image type in an in-vehicle camera data transmission scenario, a size of a data packet is about 2000 bytes, and a low priority is configured. For control information of a type such as an inter-integrated circuit (inter-integrated circuit, I2C), a general-purpose input/output (general-purpose input/output, GPIO), or a serial peripheral interface (serial peripheral interface, SPI), a size of a data packet is about 10 bytes, and a configured priority is higher than the priority of the data frame of the image type in the in-vehicle camera data transmission scenario. In addition, for control information of some types (such as retraining and sleep), a size of a data packet is less than 8 bytes, and a configured priority is higher than the priority of the control information of the type such as the I2C, the GPIO, or the SPI. A higher priority of a data packet indicates a lower transmission delay and lower jitter. However, in a current information transmission mechanism, only control information whose length is less than 64 bytes can be preferentially scheduled and transmitted, and a data frame with a high priority cannot be scheduled and transmitted in time, resulting in a high delay and high jitter of the information.

United States patent application US 2013/016724 A1 discloses various embodiments which enables preemption of frames at the MAC sublayer so that a high priority frame may interrupt the transmission of a lower priority frame.

United States patent application US 2020/153722 A1 discloses Ethernet fragmentation or frame preemption, a new technology introduced by IEEE TSN standards. In a frame-preemption-capable switch, transmission of a non-urgent frame can be stopped during its transmission. The urgent frames will be transmitted, and then the remainder of the non-urgent frame will resume transmission. Stopping a frame during transmission is not possible in traditional Ethernet.

### SUMMARY

This application provides two information transmission methods, corresponding apparatuses, computer-readable storage mediums, a vehicle, and a system, to resolve a problem of a high delay and high jitter of information caused by the fact that a data frame with a high priority cannot be scheduled and transmitted in time. The invention is defined by the appended claims.

According to a first aspect, an embodiment of this application provides an information transmission method, according to independent claim 1.

In a possible design, the first condition further includes that data frame truncation is enabled. According to the foregoing design, a first device can insert a high-priority data frame in a transmission process of a low-priority data frame when the data frame truncation is enabled.

In a possible design, when a second condition is met, the M second data packets in the second data frame are sent after the N2 first data packets are sent. The second condition includes that the data frame truncation is disabled and/or the priority of the first data frame is not lower than the priority of the first data frame. According to the foregoing design, the first device is not allowed to insert the high-priority data frame in the transmission process of the low-priority data frame when the data frame truncation is disabled.

In a possible design, the first data packet includes an indicator bit and a payload, where the payload of the first data packet carries one of a start fragment, an intermediate fragment, or an end fragment of the first data frame, and the indicator bit of the first data packet indicates one of the start fragment, the intermediate fragment, or the end fragment of the first data frame; and the second data packet includes an indicator bit and a payload, where the payload of the second data packet carries one of a start fragment, an intermediate fragment, or an end fragment of the second data frame, and the indicator bit of the second data packet indicates one of the start fragment, the intermediate fragment, or the end fragment of the first data frame. According to the foregoing design, a receiving node may determine a start, a continuation, and an end of a data frame based on an indicator bit.

In a possible design, an indicator bit of a 1^{st} first data packet in the N1 first data packets indicates that the 1^{st} first data packet is a start fragment, indicator bits of 2^{nd} to N1^{th} first data packets in the N1 first data packets and 1^{st} to (N2-1)^{th} first data packets in the N2 first data packets indicate that the first data packets are intermediate fragments, and an indicator bit of an N2^{th} first data packet in the N2 first data packets indicates that the N2^{th} first data packet is an end fragment; and an indicator bit of a 1^{st} second data packet in the M second data packets indicates that the 1^{st} second data packet is a start fragment, indicator bits of 2^{nd} to (M-1)^{th} second data packets indicate that the second data packets are intermediate fragments, and an indicator bit of an M^{th} second data packet indicates that the M^{th} second data packet is an end fragment. According to the foregoing design, after receiving two data packets indicating the start fragment, the receiving node may determine that a 2^{nd} data packet indicating the start fragment is a start data packet in the second data frame.

In a possible design, an indicator bit of a 1^{st} first data packet in the N1 first data packets indicates that the 1^{st} first data packet is a start/end fragment of a low-priority data frame, an indicator bit of an N2^{th} first data packet in the N2 first data packets indicates that the N2^{th} first data packet is a start/end fragment of the low-priority data frame, and indicator bits of 2^{nd} to N1^{th} first data packets in the N1 first data packets and 1^{st} to (N2-1)^{th} first data packets in the N2 first data packets indicate that the first data packets are intermediate fragments; and an indicator bit of a 1^{st} second data packet in the M second data packets indicates that the 1^{st} second data packet is a start/end fragment of a high-priority data frame, an indicator bit of an M^{th} second data packet indicates that the M^{th} second data packet is a start/end fragment of the high-priority data frame, and indicator bits of 2^{nd} to (M-1)^{th} second data packets in the M second data packets indicate that the second data packets are intermediate fragments. According to the foregoing design, data packet ranges of the first data frame and the second data frame may be distinguished.

In a possible design, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments; and a 1^{st} second data packet in the M second data packets indicates that the 1^{st} second data packet is a start fragment of a high-priority data frame, and indicator bits of 2^{nd} to M^{th} second data packets indicate that the second data packets are intermediate fragments. According to the foregoing design, data packet ranges of the first data frame and the second data frame may be distinguished.

In a possible design, the method further includes: sending a third data packet after the M second data packets in the second data frame are sent, where the third data packet includes an indicator bit and a payload, the indicator bit of the third data packet indicates that the third data packet is non-data information, and the payload of the third data packet indicates that data frame transmission ends; and sending a fourth data packet after the N2 first data packets in the first data frame are sent, where the fourth data packet includes an indicator bit and a payload, the indicator bit of the fourth data packet indicates that the fourth data packet is non-data information, and the payload of the fourth data packet indicates that data frame transmission ends. According to the foregoing design, the end of the first data frame and the end of the second data frame may be determined.

In a possible design, an indicator bit of a 1^{st} first data packet in the N1 first data packets indicates that the 1^{st} first data packet is a start fragment of a low-priority data frame, a payload of the 1^{st} first data packet indicates a length of the first data frame, and indicator bits of 2^{nd} to N1^{th} first data packets in the N1 first data packets and indicator bits of the N2 first data packets indicate that the first data packets are intermediate fragments; and an indicator bit of a 1^{st} second data packet in the M second data packets indicates that the 1^{st} second data packet is a start fragment of a high-priority data frame, a payload of the 1^{st} second data packet indicates a length of the second data frame, and indicator bits of 2^{nd} to M^{th} second data packets in the M second data packets indicate that the second data packets are intermediate fragments. According to the foregoing design, receiving ranges of the first data frame and the second data frame may be determined.

In a possible design, K fifth data packets that are non-data information may be further sent, where the fifth data packet includes an indicator bit and a payload, the indicator bit of the fifth data packet indicates that the fifth data packet is the non-data information, the payload of the fifth data packet carries a fragment of the non-data information, and K is an integer greater than 0. According to the foregoing design, non-data information can be sent, and the non-data information and the data frame can be distinguished.

In a possible design, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments of the low-priority data frame; and an indicator bit of a 1^{st} second data packet in the M second data packets indicates that the 1^{st} second data packet is a start fragment of a high-priority data frame, and indicator bits of 2^{nd} to M^{th} second data packets in the M second data packets indicate that the second data packets are intermediate fragments of the high-priority data frame. According to the foregoing design, receiving ranges of the first data frame and the second data frame may be determined.

In a possible design, the high-priority data frame is a data information frame or a non-data information frame.

In a possible design, a sixth data packet is sent, where the sixth data packet includes an indicator bit and a payload, the indicator bit of the sixth data packet indicates that the sixth data packet is a start fragment of a high-priority data frame, and the payload of the sixth data packet indicates that the sixth data packet is a non-data information frame. According to the foregoing design, non-data information can be sent, and the non-data information and the data frame can be distinguished.

According to a second aspect, an embodiment of this application provides an information transmission method, according to independent claim 7.

According to the method provided in this embodiment of this application, a high-priority data frame can be preferentially scheduled and transmitted, so that a transmission delay and jitter of the high-priority data frame can be reduced.

In a possible design, the first condition further includes that data frame truncation is enabled. According to the foregoing design, a first device can insert a high-priority data frame in a transmission process of a low-priority data frame when the data frame truncation is enabled.

In a possible design, when a second condition is met, the M second data packets in the second data frame are received after the N2 first data packets are received. The second condition includes that the data frame truncation is disabled and/or the priority of the first data frame is not lower than the priority of the first data frame. According to the foregoing design, the first device is not allowed to insert the high-priority data frame in the transmission process of the low-priority data frame when the data frame truncation is disabled.

In a possible design, the first data packet includes an indicator bit and a payload, where the payload of the first data packet carries one of a start fragment, an intermediate fragment, or an end fragment of the first data frame, and the indicator bit of the first data packet indicates one of the start fragment, the intermediate fragment, or the end fragment of the first data frame; and the second data packet includes an indicator bit and a payload, where the payload of the second data packet carries one of a start fragment, an intermediate fragment, or an end fragment of the second data frame, and the indicator bit of the second data packet indicates one of the start fragment, the intermediate fragment, or the end fragment of the first data frame. According to the foregoing design, a receiving node may determine a start, a continuation, and an end of a data frame based on an indicator bit.

In a possible design, an indicator bit of a 1^{st} first data packet in the N1 first data packets indicates that the 1^{st} first data packet is a start fragment, indicator bits of 2^{nd} to N1^{th} first data packets in the N1 first data packets and 1^{st} to (N2-1)^{th} first data packets in the N2 first data packets indicate that the first data packets are intermediate fragments, and an indicator bit of an N2^{th} first data packet in the N2 first data packets indicates that the N2^{th} first data packet is an end fragment; and an indicator bit of a 1^{st} second data packet in the M second data packets indicates that the 1^{st} second data packet is a start fragment, indicator bits of 2^{nd} to (M-1)^{th} second data packets indicate that the second data packets are intermediate fragments, and an indicator bit of an M^{th} second data packet indicates that the M^{th} second data packet is an end fragment. According to the foregoing design, after receiving two data packets indicating the start fragment, the receiving node may determine that a 2^{nd} data packet indicating the start fragment is a start data packet in the second data frame.

In a possible design, an indicator bit of a 1^{st} first data packet in the N1 first data packets indicates that the 1^{st} first data packet is a start/end fragment of a low-priority data frame, an indicator bit of an N2^{th} first data packet in the N2 first data packets indicates that the N2^{th} first data packet is a start/end fragment of the low-priority data frame, and indicator bits of 2^{nd} to N1^{th} first data packets in the N1 first data packets and 1^{st} to (N2-1)^{th} first data packets in the N2 first data packets indicate that the first data packets are intermediate fragments; and an indicator bit of a 1^{st} second data packet in the M second data packets indicates that the 1^{st} second data packet is a start/end fragment of a high-priority data frame, an indicator bit of an M^{th} second data packet indicates that the M^{th} second data packet is a start/end fragment of the high-priority data frame, and indicator bits of 2^{nd} to (M-1)^{th} second data packets in the M second data packets indicate that the second data packets are intermediate fragments. According to the foregoing design, data packet ranges of the first data frame and the second data frame may be distinguished.

In a possible design, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments; and a 1^{st} second data packet in the M second data packets indicates that the 1^{st} second data packet is a start fragment of a high-priority data frame, and indicator bits of 2^{nd} to M^{th} second data packets indicate that the second data packets are intermediate fragments. According to the foregoing design, data packet ranges of the first data frame and the second data frame may be distinguished.

In a possible design, after the M second data packets are received, the method further includes: receiving a third data packet, where the third data packet includes an indicator bit and a payload, the indicator bit of the third data packet indicates that the third data packet is non-data information, and the payload of the third data packet indicates that data frame transmission ends; and after the N2 first data packets are received, the method further includes: receiving a fourth data packet, where the fourth data packet includes an indicator bit and a payload, the indicator bit of the fourth data packet indicates that the fourth data packet is non-data information, and the payload of the fourth data packet indicates that data frame transmission ends. According to the foregoing design, the end of the first data frame and the end of the second data frame may be determined.

In a possible design, an indicator bit of a 1^{st} first data packet in the N1 first data packets indicates that the 1^{st} first data packet is a start fragment of a low-priority data frame, a payload of the 1^{st} first data packet indicates a length of the first data frame, and indicator bits of 2^{nd} to N1^{th} first data packets in the N1 first data packets and indicator bits of the N2 first data packets indicate that the first data packets are intermediate fragments; and an indicator bit of a 1^{st} second data packet in the M second data packets indicates that the 1^{st} second data packet is a start fragment of a high-priority data frame, a payload of the 1^{st} second data packet indicates a length of the second data frame, and indicator bits of 2^{nd} to M^{th} second data packets in the M second data packets indicate that the second data packets are intermediate fragments. According to the foregoing design, receiving ranges of the first data frame and the second data frame may be determined.

In a possible design, K fifth data packets are received, where each of the K fifth data packets includes an indicator bit and a payload, the indicator bit of each of the K fifth data packets indicates that the fifth data packet is non-data information, K is an integer greater than 0, and the payload of the fifth data packet carries a fragment of the non-data information; and the non-data information is determined based on the K fifth data packets. According to the foregoing design, non-data information can be sent, and the non-data information and the data frame can be distinguished.

In a possible design, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments of the low-priority data frame; and an indicator bit of a 1^{st} second data packet in the M second data packets indicates that the 1^{st} second data packet is a start fragment of a high-priority data frame, and indicator bits of 2^{nd} to M^{th} second data packets in the M second data packets indicate that the second data packets are intermediate fragments of the high-priority data frame. According to the foregoing design, receiving ranges of the first data frame and the second data frame may be determined.

In a possible design, the high-priority data frame is a data information frame or a non-data information frame.

In a possible design, a sixth data packet is received, where the sixth data packet includes an indicator bit and a payload, the sixth data packet includes the indicator bit and the payload, the indicator bit of the sixth data packet indicates that the sixth data packet is a start fragment of a high-priority data frame, and the payload of the sixth data packet indicates that the sixth data packet is a non-data information frame; and non-data information is determined based on the sixth data packet. According to the foregoing design, non-data information can be sent, and the non-data information and the data frame can be distinguished.

According to a third aspect, this application provides an information transmission apparatus, according to independent claim 12.

According to a fourth aspect, this application provides an information transmission apparatus, according to independent claim 13.

According to a fifth aspect, an embodiment of this application provides an information transmission system, including the information transmission apparatus according to the third aspect and the information transmission apparatus according to the fourth aspect.

According to a sixth aspect, an embodiment of this application further provides a computer-readable storage medium. The computer-readable storage medium stores instructions, and when the instructions are run on a computer, the computer is enabled to perform the method according to any one of the first aspect or the designs of the first aspect, or the second aspect or the designs of the second aspect.

According to an seventh aspect, an embodiment of this application provides a vehicle, according to independent claim 15.

It should be noted that "coupling" in embodiments of this application means that two components are directly or indirectly combined with each other.

### BRIEF DESCRIPTION OF DRAWINGS

FIG. 1 is a schematic flowchart of an information transmission method according to an embodiment of this application;
FIG. 2 is a schematic diagram of transmission of a data frame according to an embodiment of this application;
FIG. 3 is a schematic diagram of transmission of a data frame according to an embodiment of this application;
FIG. 4 is a schematic diagram of transmission of a data frame according to an embodiment of this application;
FIG. 5 is a schematic diagram of transmission of a data frame according to an embodiment of this application;
FIG. 6 is a schematic diagram of transmission of non-data information according to an embodiment of this application;
FIG. 7 is a schematic diagram of transmission of non-data information according to an embodiment of this application;
FIG. 8 is a schematic diagram of transmission of non-data information according to an embodiment of this application;
FIG. 9 is a schematic diagram of transmission of non-data information according to an embodiment of this application;
FIG. 10 is a schematic diagram of transmission of a data frame according to an embodiment of this application;
FIG. 11 is a schematic diagram of transmission of non-data information according to an embodiment of this application;
FIG. 12 is a schematic diagram of a structure of a communications apparatus according to an embodiment of this application; and
FIG. 13 is a schematic diagram of a structure of a communications apparatus according to an embodiment of this application.

### DESCRIPTION OF EMBODIMENTS

The terms "comprising", "including", or any other variant thereof mentioned in the specification, claims, and accompanying drawings of embodiments of this application are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application is applicable to wired transmission, for example, is applicable to wired point-to-point high-speed transmission, for example, image and control transmission from a camera to a multi-domain controller (multi-domain controller, MDC) of an autonomous driving platform, and image transmission from a vehicle-mounted device like a vehicle-mounted camera or a cockpit domain controller (cockpit domain controller or control domain cockpit, CDC) to a large screen.

For example, a communications apparatus in embodiments of this application may be a device, for example, a vehicle-mounted image sensor like a camera, a lidar, or the like, that can send information (such as a data frame or control information) to another device, or may be an image processing device, for example, an MDC or a CDC, or may be an image display device, for example, a large screen. For another example, the communications apparatus in embodiments of this application may be another transmission device in addition to a vehicle-mounted apparatus.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. A character "/" usually indicates an "or" relationship between the associated objects. In addition, "at least one item (piece) of the following" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, and are not intended to limit sizes, content, an order, a time sequence, priorities, or importance degrees of the plurality of objects. For example, a first data packet and a second data packet are merely names given for ease of description, and the two data packets may be a same data packet, or may be different data packets.

The following describes technical features in embodiments of this application.

In a communications system, sizes of data packets corresponding to information of different service types may be different. Different priorities may also be configured for the information of different service types. For example, for a data frame of an image type in an in-vehicle camera data transmission scenario, a size of a data packet is about 2000 bytes, and a low priority is configured. For control information of a type such as an inter-integrated circuit (inter-integrated circuit, I2C), a general-purpose input/output (general-purpose input/output, GPIO), or a serial peripheral interface (serial peripheral interface, SPI), a size of a data packet is about 10 bytes, and a configured priority is higher than the priority of the data frame of the image type in the in-vehicle camera data transmission scenario. In addition, for control information of some types (such as retraining and sleep), a size of a data packet is less than 8 bytes, and a configured priority is higher than the priority of the control information of the type such as the I2C, the GPIO, or the SPI. A higher priority of a data packet indicates a lower transmission delay and lower jitter. However, in a current information transmission mechanism, only control information whose length is less than 64 bytes can be preferentially scheduled and transmitted, and a data frame with a high priority cannot be scheduled and transmitted in time, resulting in a high delay and high jitter of the information.

Based on this, embodiments of this application provide an information transmission method and apparatus, to resolve a problem of a high delay and high jitter of information caused by the fact that a data frame with a high priority cannot be scheduled and transmitted in time. The method and the apparatus are based on the same technical concept. The method and the device have similar principles for resolving the problems. Therefore, for implementation of the apparatus and the method, refer to each other, and details of repeated parts are not described. Embodiments of this application provide an information transmission method and apparatus, which may be applied to an in-vehicle network, especially an in-vehicle network of an intelligent vehicle, and may also be applied to another wired transmission device.

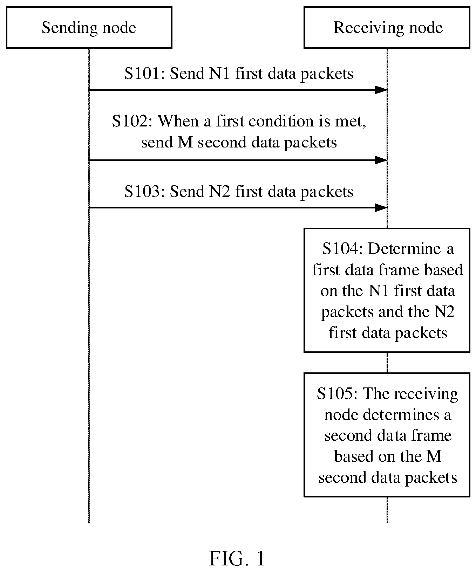

The following describes an embodiment of this application in detail with reference to FIG. 1.

This application provides an information transmission method, and the method may be applied to an information transmission system. As shown in FIG. 1, the method includes the following steps.

S101: A sending node sends N1 first data packets in a first data frame. Correspondingly, a receiving node receives the N1 first data packets in the first data frame.

N1 is an integer greater than or equal to 1.

S102: When a first condition is met, the sending node sends M second data packets in a second data frame. Correspondingly, the receiving node receives the M second data packets in the second data frame.

The first condition may include that a priority of the second data frame is higher than a priority of the first data frame. Optionally, the first condition may further include that data frame truncation is enabled.

That the data frame truncation is disabled may mean that transmission of a low-priority data frame cannot be interrupted by a high-priority data frame, that is, insertion of the high-priority data frame is not allowed in a transmission process of the low-priority data frame. That the data frame truncation is enabled may mean that transmission of the low-priority data frame can be interrupted by the high-priority data frame, that is, insertion of one or more high-priority data frames is allowed in the transmission process of the low-priority data frame.

According to step S102, when the first condition is met, the sending node may preferentially send the M second data packets in the second data frame, that is, may send the M second data packets in the second data frame before sending N2 first data packets in the first data frame.

In a possible implementation, when a second condition is met, the first device sends the M second data packets in the second data frame after sending the N2 first data packets. The second condition may include that the data frame truncation is disabled and/or the priority of the first data frame is not lower than the priority of the first data frame.

S103: The sending node sends the N2 first data packets in the first data frame. Correspondingly, the receiving node receives the N2 first data packets in the first data frame.

The first data frame includes the N1 first data packets and the N2 first data packets, where N2 is an integer greater than or equal to 0.

S104: The receiving node determines the first data frame based on the N1 first data packets and the N2 first data packets.

S105: The receiving node determines the second data frame based on the M second data packets.

It should be noted that step S105 may alternatively be performed before step S103.

In a possible implementation, the first data packet may include an indicator bit and a payload, where the payload of the first data packet carries one of a start fragment, an intermediate fragment, or an end fragment of the first data frame, and the indicator bit of the first data packet indicates one of the start fragment, the intermediate fragment, or the end fragment of the first data frame; and the second data packet may include an indicator bit and a payload, where the payload of the second data packet carries one of a start fragment, an intermediate fragment, or an end fragment of the second data frame, and the indicator bit of the second data packet indicates one of the start fragment, the intermediate fragment, or the end fragment of the first data frame.

Example 1: An indicator bit of a 1^{st} first data packet in the N1 first data packets indicates that the 1^{st} first data packet is a start fragment, indicator bits of 2^{nd} to N1^{th} first data packets in the N1 first data packets and 1^{st} to (N2-1)^{th} first data packets in the N2 first data packets indicate that the first data packets are intermediate fragments, and an indicator bit of an N2^{th} first data packet in the N2 first data packets indicates that the N2^{th} first data packet is an end fragment; and an indicator bit of a 1^{st} second data packet in the M second data packets indicates that the 1^{st} second data packet is a start fragment, indicator bits of 2^{nd} to (M-1)^{th} second data packets indicate that the second data packets are intermediate fragments, and an indicator bit of an M^{th} second data packet indicates that the M^{th} second data packet is an end fragment.

After receiving two data packets whose indicator bits indicate start fragments, the receiving node may determine that a 2^{nd} data packet whose indicator bit indicates a start fragment is a 1^{st} data packet in the second data frame, and a 1^{st} data packet whose indicator bit indicates a start fragment is a 1^{st} data packet in the first data frame. In addition, after receiving the two data packets whose indicator bits indicate start fragments, the receiving node receives two data packets whose indicator bits indicate end fragments. The receiving node determines that a 1^{st} data packet whose indicator bit indicates an end fragment is a last data packet in the second data frame, and a 2^{nd} data packet whose indicator bit indicates an end fragment is a last data packet in the first data frame. In addition, the receiving node determines that an intermediate data packet in the second data frame includes a data packet whose indicator bit indicates an intermediate fragment and that is in data packets between the 2^{nd} data packet whose indicator bit indicates a start fragment and the 1^{st} data packet whose indicator bit indicates an end fragment, and an intermediate data packet in the first data frame includes a data packet whose indicator bit indicates an intermediate fragment and that is in data packets between the 1^{st} data packet whose indicator bit indicates a start fragment and the 2^{nd} data packet whose indicator bit indicates a start fragment and a data packet whose indicator bit indicates an intermediate fragment and that is in data packets between the 1^{st} data packet whose indicator bit indicates an end fragment and the 2^{nd} data packet whose indicator bit indicates an end fragment.

There is no data packet whose indicator bit indicates an end fragment between the two data packets whose indicator bits indicate start fragments.

For example, an indicator bit of a data packet carrying a start fragment may be a first value, an indicator bit of a data packet carrying an intermediate fragment may be a second value, and an indicator bit of a data packet carrying an end fragment may be a third value. The first value indicates the start fragment, the second value indicates the intermediate fragment, and the third value indicates the end fragment. Optionally, an indicator bit of a data packet carrying non-data information may be a fourth value, and the fourth value indicates the non-data information.

Therefore, the indicator bit of the 1^{st} first data packet in the N1 first data packets may be the first value, the indicator bits of the 2^{nd} to N1^{th} first data packets in the N1 first data packets and the 1^{st} to (N2-1)^{th} first data packets in the N2 first data packets each may be the second value, and the indicator bit of the N2^{th} first data packet in the N2 first data packets may be the third value; and the indicator bit of the 1^{st} second data packet in the M second data packets may be the first value, the indicator bits of the 2^{nd} to (M-1)^{th} second data packets each may be the second value, and the indicator bit of the M^{th} second data packet may be the third value.

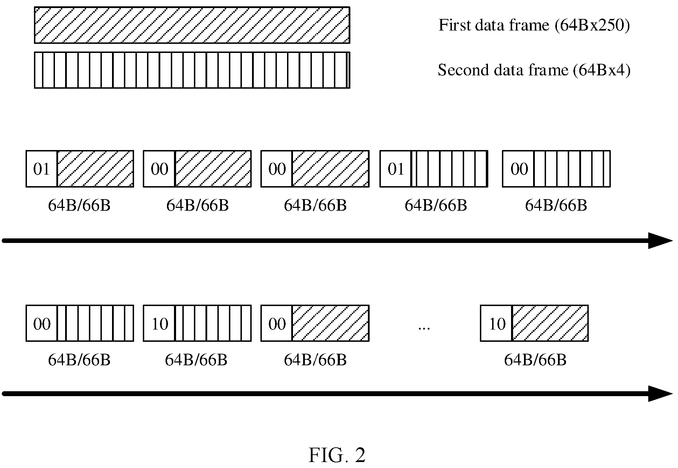

For example, the first value is 01, the second value is 00, the third value is 10, and the fourth value is 11. A size of the first data frame is 64B×250, and a size of the second data frame is 64B×4. As shown in FIG. 2, after sending three data packets in the first data frame, the sending node sends four data packets in the second data frame, and after sending the four data packets in the second data frame, the sending node continues to send 247 data packets that are not sent in the first data frame.

After receiving two data packets whose indicator bits each are 01, the receiving node may consider that a 2^{nd} data packet whose indicator bit is 01 is the 1^{st} data packet in the second data frame. The second data frame includes the 2^{nd} data packet whose indicator bit is 01, data packets whose indicator bits each are 00 and that are in data packets between the 2^{nd} data packet whose indicator bit is 01 and a 1^{st} data packet whose indicator bit is 10, and the 1^{st} data packet whose indicator bit is 10. The first data frame includes a 1^{st} data packet whose indicator bit is 01, data packets whose indicator bits each are 00 and that are in data packets between the 1^{st} data packet whose indicator bit is 01 and the 2^{nd} data packet whose indicator bit is 01, data packets whose indicator bits each are 00 and that are between the 1^{st} data packet whose indicator bit is 10 and a 2^{nd} data packet whose indicator bit is 10, and the 2^{nd} data packet whose indicator bit is 10.

Example 2: An indicator bit of a 1^{st} first data packet in the N1 first data packets indicates that the 1^{st} first data packet is a start/end fragment of a low-priority data frame, an indicator bit of an N2^{th} first data packet in the N2 first data packets indicates that the N2^{th} first data packet is a start/end fragment of the low-priority data frame, and indicator bits of 2^{nd} to N1^{th} first data packets in the N1 first data packets and 1^{st} to (N2-1)^{th} first data packets in the N2 first data packets indicate that the first data packets are intermediate fragments; and an indicator bit of a 1^{st} second data packet in the M second data packets indicates that the 1^{st} second data packet is a start/end fragment of a high-priority data frame, an indicator bit of an M^{th} second data packet indicates that the M^{th} second data packet is a start/end fragment of the high-priority data frame, and indicator bits of 2^{nd} to (M-1)^{th} second data packets in the M second data packets indicate that the second data packets are intermediate fragments.

The receiving node may determine the following: The first data frame includes: a 1^{st} data packet whose indicator bit indicates a start/end fragment of a low-priority data frame, a data packet whose indicator bit indicates an intermediate fragment and that is in data packets between the 1^{st} data packet whose indicator bit indicates the start/end fragment of the low-priority data frame and a 1^{st} data packet whose indicator bit indicates a start/end fragment of a high-priority data frame, a data packet whose indicator bit indicates an intermediate fragment and that is in data packets between a 2^{nd} data packet whose indicator bit indicates a start/end fragment of the high-priority data frame and a 2^{nd} data packet whose indicator bit indicates a start/end fragment of the low-priority data frame, and the 2^{nd} data packet whose indicator bit indicates the start/end fragment of the low-priority data frame; and the second data frame includes: the 1^{st} data packet whose indicator bit indicates the start/end fragment of the high-priority data frame, a data packet whose indicator bit indicates an intermediate fragment and that is in data packets between the 1^{st} data packet whose indicator bit indicates the start/end fragment of the high-priority data frame and the 2^{nd} data packet whose indicator bit indicates the start/end fragment of the high-priority data frame, and the 2^{nd} data packet whose indicator bit indicates the start/end fragment of the high-priority data frame.

For example, an indicator bit of a data packet carrying a start/end fragment of the first data frame may be a first value, an indicator bit of a data packet carrying an intermediate fragment may be a second value, and an indicator bit of a data packet carrying a start/end fragment of the second data frame may be a third value. The first value indicates a start fragment of a low-priority data frame, the second value indicates an intermediate fragment, and the third value indicates a start/end fragment of a high-priority data frame. Optionally, an indicator bit of a data packet carrying non-data information may be a fourth value, and the fourth value indicates the non-data information.

Therefore, the indicator bit of the 1^{st} first data packet in the N1 first data packets may be the first value, the indicator bits of the 2^{nd} to N1^{th} first data packets in the N1 first data packets and the 1^{st} to (N2-1)^{th} first data packets in the N2 first data packets each may be the second value, and the indicator bit of the N2^{th} first data packet in the N2 first data packets may be the first value; and the indicator bit of the 1^{st} second data packet in the M second data packets may be the third value, the indicator bits of the 2^{nd} to (M-1)^{th} second data packets each may be the second value, and the indicator bit of the M^{th} second data packet may be the third value.

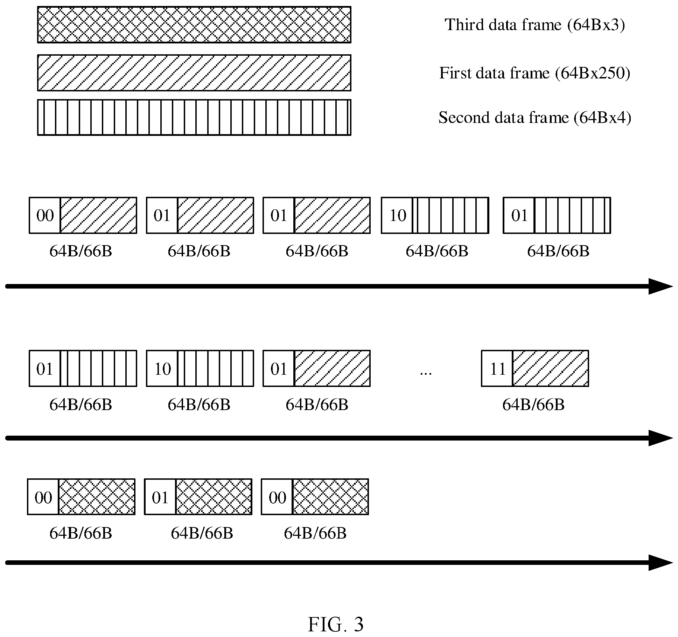

For example, the first value is 00, the second value is 01, the third value is 10, and the fourth value is 11. A size of the first data frame is 64B×250, and a size of the second data frame is 64B×4. As shown in FIG. 3, after sending three data packets in the first data frame, the sending node sends four data packets in the second data frame, and after sending the four data packets in the second data frame, the sending node continues to send 247 data packets that are not sent in the first data frame. Optionally, a third data frame may be further sent after the first data frame is sent, where a size of the third data frame is 64B×3.

The receiving node may determine the following: The second data frame includes: a 1^{st} data packet whose indicator bit is 10, data packets whose indicator bits each are 01 and that are in data packets between the 1^{st} data packet whose indicator bit is 10 and a 2^{nd} data packet whose indicator bit is 10, and the 2^{nd} data packet whose indicator bit is 10; the first data frame includes: a 1^{st} data packet whose indicator bit is 00, data packets whose indicator bits each are 01 and that are in data packets between the 1^{st} data packet whose indicator bit is 00 and the 1^{st} data packet whose indicator bit is 10, data packets whose indicator bits each are 01 and that are in data packets between the 2^{nd} data packet whose indicator bit is 10 and a 2^{nd} data packet whose indicator bit is 00, and the 2^{nd} data packet whose indicator bit is 00; and the third data frame is a 3^{rd} data packet whose indicator bit is 00, a data packet whose indicator bit is 01 and that is in data packets between the 3^{rd} data packet whose indicator bit is 00 and a 4^{th} data packet whose indicator bit is 00, and the 4^{th} data packet whose indicator bit is 00.

Example 3: An indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments; and a 1^{st} second data packet in the M second data packets indicates that the 1^{st} second data packet is a start fragment of a high-priority data frame, and indicator bits of 2^{nd} to M^{th} second data packets indicate that the second data packets are intermediate fragments.

Optionally, the sending node may send a third data packet after sending the M second data packets in the second data frame. The third data packet includes an indicator bit and a payload, the indicator bit of the third data packet indicates that the third data packet is non-data information, and the payload of the third data packet indicates that data frame transmission ends. The sending node may send a fourth data packet after sending the N2 first data packets in the first data frame. The fourth data packet includes an indicator bit and a payload, the indicator bit of the fourth data packet indicates that the fourth data packet is non-data information, and the payload of the fourth data packet indicates that data frame transmission ends. Manners in which the third data packet and the fourth data packet indicate that the data frame transmission ends may be the same or may be different. This is not specifically limited herein.

The receiving node may determine the following: The first data frame includes: a data packet whose indicator bit indicates a start fragment of a low-priority data frame, a data packet whose indicator bit indicates an intermediate fragment and that is in data packets between the data packet whose indicator bit indicates a start fragment of a low-priority data frame and a data packet whose indicator bit indicates a start fragment of a high-priority data frame, and a data packet whose indicator bit indicates an intermediate fragment and that is in data packets between a 1^{st} data packet (namely, the third data packet) whose indicator bit indicates non-data information and whose payload indicates that data frame transmission ends and a 2^{nd} data packet (namely, the fourth data packet) whose indicator bit indicates non-data information and whose payload indicates that data frame transmission ends; and the second data frame includes: the data packet whose indicator bit indicates a start fragment of a high-priority data frame, and a data packet whose indicator bit indicates an intermediate fragment and that is in data packets between the data packet whose indicator bit indicates a start fragment of a high-priority data frame and the 1^{st} data packet (namely, the third data packet) whose indicator bit indicates non-data information and whose payload indicates that data frame transmission ends.

For example, an indicator bit of a data packet carrying a start fragment of the first data frame may be a first value, an indicator bit of a data packet carrying an intermediate/end fragment may be a second value, an indicator bit of a data packet carrying a start fragment of the second data frame may be a third value, and an indicator bit of a data packet carrying non-data information may be a fourth value. The first value indicates a start fragment of a low-priority data frame, the second value indicates an intermediate fragment, the third value indicates a start fragment of a high-priority data frame, and the fourth value indicates the non-data information.

Therefore, the indicator bit of the 1^{st} first data packet in the N1 first data packets may be the first value, the indicator bits of the 2^{nd} to N1^{th} first data packets in the N1 first data packets and the indicator bits of the N2 first data packets each may be the second value; the indicator bit of the 1^{st} second data packet in the M second data packets may be the third value, and the indicator bits of the 2^{nd} to M^{th} second data packets each may be the second value; and the indicator bit of the third data packet and the indicator bit of the fourth data packet each may be the fourth value.

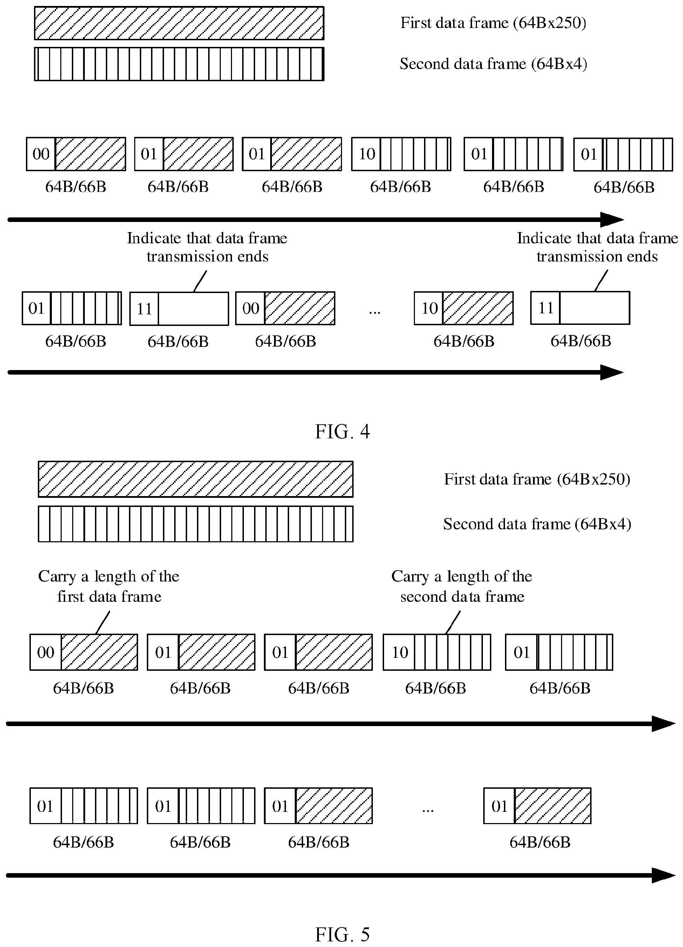

For example, the first value is 00, the second value is 01, the third value is 10, and the fourth value is 11. A size of the first data frame is 64B×250, and a size of the second data frame is 64B×4. As shown in FIG. 4, after sending three data packets in the first data frame, the sending node sends four data packets in the second data frame, and after sending the four data packets in the second data frame, the sending node continues to send 247 data packets that are not sent in the first data frame.

The receiving node may determine the following: The second data frame includes: a data packet whose indicator bit is 10, and a data packet whose indicator bit is 01 and that is in data packets between the data packet whose indicator bit is 10 and a 1^{st} data packet whose indicator bit is 11 and whose payload indicates that data frame transmission ends; and the first data frame includes: a data packet whose indicator bit is 00, a data packet whose indicator bit is 01 and that is in data packets between the data packet whose indicator bit is 00 and the data packet whose indicator bit is 10, and a data packet whose indicator bit is 01 and that is in data packets between the 1^{st} data packet whose indicator bit is 11 and whose payload indicates that data frame transmission ends and a 2^{nd} data packet whose indicator bit is 11 and whose payload indicates that data frame transmission ends.

Example 4: An indicator bit of a 1^{st} first data packet in the N1 first data packets indicates that the 1^{st} first data packet is a start fragment of a low-priority data frame, a payload of the 1^{st} first data packet indicates a length of the first data frame, and indicator bits of 2^{nd} to N1^{th} first data packets in the N1 first data packets and indicator bits of the N2 first data packets indicate that the first data packets are intermediate fragments; and an indicator bit of a 1^{st} second data packet in the M second data packets indicates that the 1^{st} second data packet is a start fragment of a high-priority data frame, a payload of the 1^{st} second data packet indicates a length of the second data frame, and indicator bits of 2^{nd} to M^{th} second data packets in the M second data packets indicate that the second data packets are intermediate fragments.

For example, an indicator bit of a data packet carrying a start fragment of the first data frame may be a first value, an indicator bit of a data packet carrying an intermediate/end fragment may be a second value, and an indicator bit of a data packet carrying a start fragment of the second data frame may be a third value. The first value indicates a start fragment of a low-priority data frame, the second value indicates an intermediate fragment, and the third value indicates a start fragment of a high-priority data frame.

Optionally, an indicator bit of a data packet carrying non-data information may be a fourth value, and the fourth value indicates the non-data information.

Therefore, the indicator bit of the 1^{st} first data packet in the N1 first data packets may be the first value, the 1^{st} first data packet may carry the length of the first data frame, and the indicator bits of the 2^{nd} to N1^{th} first data packets in the N1 first data packets and the indicator bits of the N2 first data packets each may be the second value; and the indicator bit of the 1^{st} second data packet in the M second data packets may be the third value, the 1^{st} second data packet may carry the length of the first data frame, the indicator bits of the 2^{nd} to M^{th} second data packets each may be the second value.

For example, the first value is 00, the second value is 01, the third value is 10, and the fourth value is 11. A size of the first data frame is 64B×250, and a size of the second data frame is 64B×4. As shown in FIG. 5, after sending three data packets in the first data frame, the sending node sends four data packets in the second data frame, and after sending the four data packets in the second data frame, the sending node continues to send 247 data packets that are not sent in the first data frame.

The receiving node may determine the following: The first data frame includes: a data packet whose indicator bit is 00, two data packets whose indicator bits each are 01 after the data packet whose indicator bit is 10, and 247 data packets whose indicator bits each are 01 in data packets after the second data frame; and the second data frame includes a data packet whose indicator bit is 10 and three data packets whose indicator bits each are 01 and that are in data packets after the data packet whose indicator bit is 10.

Optionally, the sending node may further send K fifth data packets that are non-data information, where the fifth data packet includes an indicator bit and a payload, the indicator bit of the fifth data packet indicates that the fifth data packet is the non-data information, the payload of the fifth data packet carries a fragment of the non-data information, and K is an integer greater than 0.

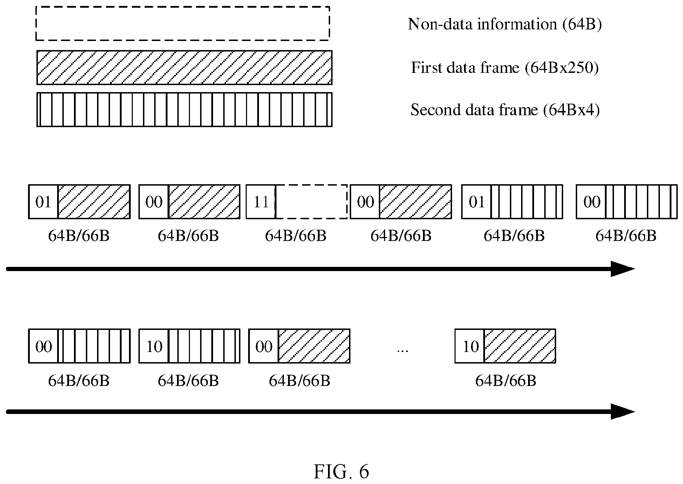

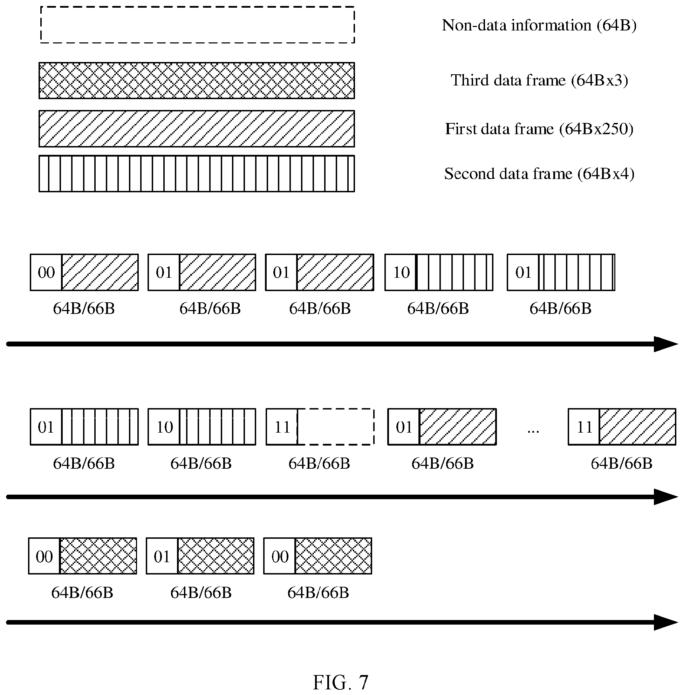

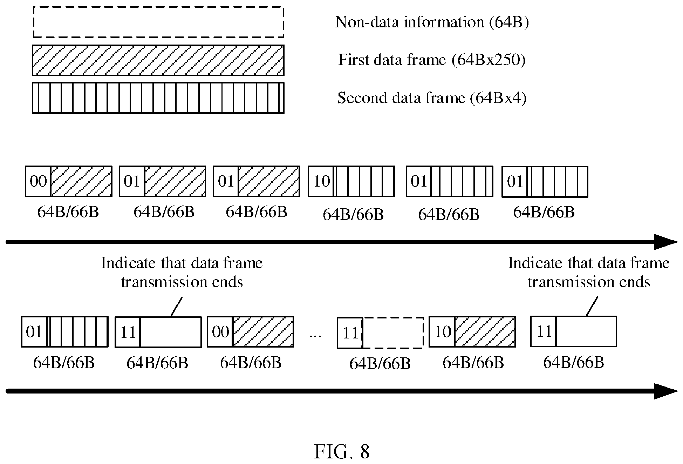

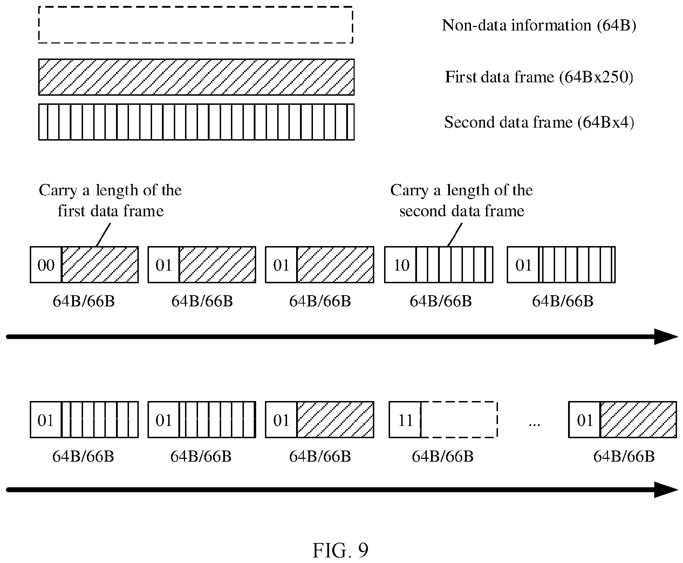

The non-data information may be sent after or before any data packet in the first data frame and the second data frame. For example, a size of non-data information is 64B. Based on the information transmission method shown in FIG. 2, a manner of sending the non-data information may be shown in FIG. 6. Based on the information transmission method shown in FIG. 3, a manner of sending the non-data information may be shown in FIG. 7. Based on the information transmission method shown in FIG. 4, a manner of sending the non-data information may be shown in FIG. 8. Based on the information transmission method shown in FIG. 5, a manner of sending the non-data information may be shown in FIG. 9.

Example 5: An indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments of the low-priority data frame; and an indicator bit of a 1^{st} second data packet in the M second data packets indicates that the 1^{st} second data packet is a start fragment of a high-priority data frame, and indicator bits of 2^{nd} to M^{th} second data packets in the M second data packets indicate that the second data packets are intermediate fragments of the high-priority data frame. The high-priority data frame is a data information frame or a non-data information frame.

The receiving node may determine the following: The first data frame includes: a data packet whose indicator bit indicates a start fragment of a low-priority data frame, and a data packet whose indicator bit indicates an intermediate fragment of the low-priority data frame; and the second data frame includes: a data packet that is not non-data information and whose indicator bit indicates a start fragment of a high-priority data frame, and a data packet whose indicator bit indicates an intermediate fragment of the high-priority data frame.

For example, an indicator bit of a data packet carrying a start fragment of the first data frame may be a first value, an indicator bit of a data packet carrying an intermediate/end fragment of the first data frame may be a second value, an indicator bit of a data packet carrying a start fragment of the second data frame may be a third value, an indicator bit of a data packet carrying an intermediate/end fragment of the second data frame may be a fourth value, and an indicator bit of a data packet carrying non-data information is a third value. The first value indicates a start fragment of a low-priority data frame, the second value indicates an intermediate fragment of a low-priority data frame, the third value indicates a start fragment of a high-priority data frame, and the fourth value indicates an intermediate fragment of a high-priority data frame.

Therefore, the indicator bit of the 1^{st} first data packet in the N1 first data packets may be the first value, the indicator bits of the 2^{nd} to N1^{th} first data packets in the N1 first data packets and the indicator bits of the N2 first data packets each may be the second value; the indicator bit of the 1^{st} second data packet in the M second data packets may be the third value, and the indicator bits of the 2^{nd} to M^{th} second data packets each may be the fourth value; and an indicator bit of a data packet that is non-data information may be the third value.

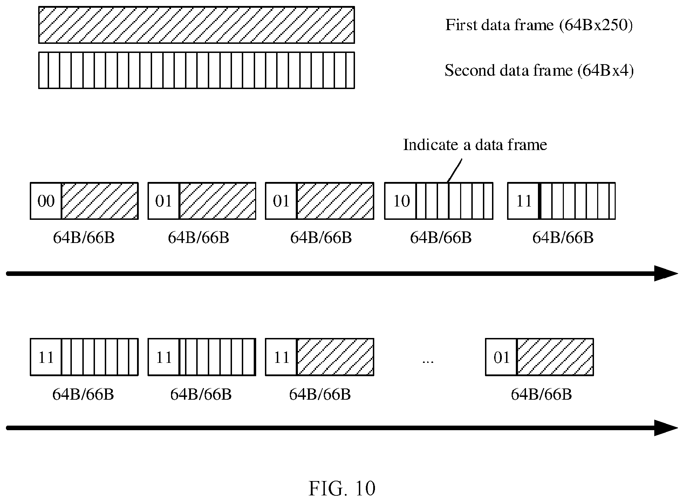

For example, the first value is 00, the second value is 01, the third value is 10, and the fourth value is 11. A size of the first data frame is 64B×250, and a size of the second data frame is 64B×4. As shown in FIG. 10, after sending three data packets in the first data frame, the sending node sends four data packets in the second data frame, and after sending the four data packets in the second data frame, the sending node continues to send 247 data packets that are not sent in the first data frame.

The receiving node may determine the following: The second data frame includes: a data packet that is non-data information and whose indicator bit is 10, and a data packet whose indicator bit is 11; and the first data frame includes: a data packet whose indicator bit is 00 and a data packet whose indicator bit is 01.

It may be understood that the values of the first value to the fourth value and the size of the data frame are merely examples. This is not limited in embodiments of this application.

Optionally, in the foregoing example descriptions, the receiving node may determine end of a data frame in either of the following two manners:
Manner 1: The sending node may also send a seventh data packet after sending the M second data packets in the second data frame. The seventh data packet includes an indicator bit and a payload, the indicator bit of the seventh data packet is a third value, and the payload of the seventh data packet indicates that data frame transmission ends. The sending node may send an eighth data packet after sending the N2 first data packets in the first data frame. The eighth data packet includes an indicator bit and a payload, the indicator bit of the eighth data packet is the third value, and the payload of the eighth data packet indicates that data frame transmission ends. Manners in which the seventh data packet and the eighth data packet indicate that the data frame transmission ends may be the same or may be different. This is not specifically limited herein. In the foregoing manner, after the seventh data packet in the second data frame is received, it may be determined that transmission of the second data frame ends, and after the eighth data packet is received, it may be determined that transmission of the first data frame ends.
Manner 2: The receiving node may determine that an end data packet in the first data frame is a data packet previous to a 2^{nd} data packet whose indicator bit is a first value, and an end data packet in the second data frame is a data packet previous to a data packet whose indicator bit is a second value, where receiving time of the data packet whose indicator bit is the second value is later than receiving time of a data packet whose indicator bit is a third value.

Optionally, the sending node may further send a sixth data packet carrying non-data information, where the sixth data packet includes an indicator bit and a payload, and the indicator bit of the sixth data packet indicates that the sixth data packet is a start fragment of a high-priority data frame.

Optionally, a payload of a 1^{st} second data packet may indicate a data frame; and/or a payload of a data packet carrying non-data information may indicate the non-data information. In the foregoing manner, the start fragment of the high-priority data frame and the non-data information may be distinguished.

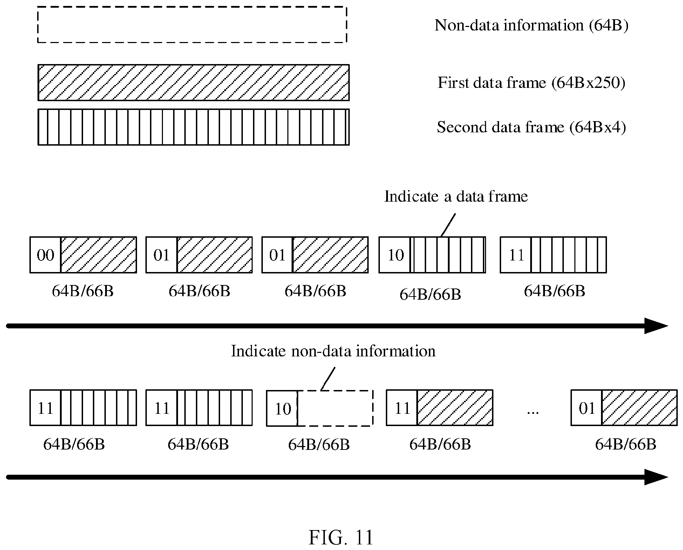

The sixth data packet may be sent after or before any data packet in the first data frame and the second data frame. For example, based on the information transmission method shown in FIG. 10, a manner of sending the non-data information may be shown in FIG. 11.

For example, the non-data information may be but is not limited to a physical layer padding bit, a sub-indicator bit, control information, or the like.

It should be understood that in embodiments of this application, only a 2-bit indicator bit is used as an example for description. In specific implementation, a quantity of bits included in the indicator bit may be another quantity, for example, 3 bits or 4 bits. This is not specifically limited herein. If the quantity of bits included in the indicator bit is greater than 2, another value of the indicator bit may alternatively be used to indicate other content, or may be reserved. This is not specifically limited herein.

In a possible implementation, if the data frame truncation is disabled, insertion of a high-priority data frame is not allowed in a transmission process of a low-priority data frame. If the data frame truncation is enabled, insertion of one or more high-priority data frames is allowed in the transmission process of the low-priority data frame. That the data frame truncation is disabled may mean that transmission of the low-priority data frame cannot be interrupted by the high-priority data frame, that is, insertion of the high-priority data frame is not allowed in the transmission process of the low-priority data frame. That the data frame truncation is enabled may mean that transmission of the low-priority data frame can be interrupted by the high-priority data frame, that is, insertion of one or more high-priority data frames is allowed in the transmission process of the low-priority data frame.

Descriptions are provided based on Example 1. When an indicator bit is 01, it indicates that a data packet carries a start fragment, that is, the data packet is start of a data frame; and when an indicator bit is 10, it indicates that a data packet carries an end fragment, that is, the data packet is end of a data frame. If the data frame truncation is disabled, the data packet whose indicator bit is 01 and the data packet whose indicator bit is 10 may appear in pairs in sequence, that is, there is no other data packet whose indicator bit is 01 or other data packet whose indicator bit is 10 between the data packet whose indicator bit is 01 and the data packet whose indicator bit is 10. In this manner, it can be ensured that transmission of a low-priority data frame may not be interrupted by a high-priority data frame. If the data frame truncation is enabled, insertion of one or more high-priority data frames is allowed in the transmission process of the low-priority data frame. Therefore, there may be another data packet whose indicator bit is 01 and another data packet whose indicator bit is 10 between the data packet whose indicator bit is 01 and the data packet whose indicator bit is 10, for example, this is shown in FIG. 2.

Descriptions are provided based on Example 2. When an indicator bit is 00, it indicates that a data packet carries a start fragment or an end fragment of a low-priority data frame, that is, the data packet is start or end of transmission of the low-priority data frame; and when an indicator bit is 10, it indicates that a data packet carries a start fragment or an end fragment of a high-priority data frame, that is, the data packet is start or end of transmission of the high-priority data frame. If the data frame truncation is disabled, the data packet whose indicator bit is 00 may appear in pairs in sequence, that is, there is no data packet whose indicator bit is 10 between two data packets whose indicator bits each are 00. In this manner, it can be ensured that transmission of a low-priority data frame may not be interrupted by a high-priority data frame. If the data frame truncation is enabled, insertion of one or more high-priority data frames is allowed in the transmission process of the low-priority data frame. Therefore, there may be the data packet whose indicator bit is 10 between the two data packets whose indicator bits each are 00, for example, this is shown in FIG. 3.

Descriptions are provided based on Example 3. When an indicator bit is 00, it indicates that a data packet carries a start fragment of a low-priority data frame, that is, the data packet is start of transmission of the low-priority data frame; when an indicator bit is 10, it indicates that a data packet carries a start fragment of a high-priority data frame, that is, the data packet is start of transmission of the high-priority data frame; and when an indicator bit is 11, it indicates that a data packet carries non-data information. If the data frame truncation is disabled, the data packet whose indicator bit is 00 and the data packet whose indicator bit is 11 and whose payload indicates that data frame transmission ends may appear in pairs in sequence, that is, there is no data packet whose indicator bit is 10 and the data packet whose indicator bit is 11 and whose payload indicates that data frame transmission ends between the data packet whose indicator bit is 00 and the data packet whose indicator bit is 11 and whose payload indicates that data frame transmission ends. In this manner, it can be ensured that transmission of a low-priority data frame may not be interrupted by a high-priority data frame. If the data frame truncation is enabled, insertion of one or more high-priority data frames is allowed in the transmission process of the low-priority data frame. Therefore, there may be the data packet whose indicator bit is 10 and the data packet whose indicator bit is 11 and whose payload indicates that data frame transmission ends between the data packet whose indicator bit is 00 and the data packet whose indicator bit is 11 and whose payload indicates that data frame transmission ends, for example, this is shown in FIG. 4.

Embodiments of this application describe a process of sending two data frames with different priorities. It should be understood that the method is also applicable to sending of a plurality of data frames with different priorities. For example, it is assumed that a third data frame is to be sent, where a priority of the third data frame is higher than a priority of a second data frame, and the third data frame may be inserted into any data packet in the second data frame for sending. In this process, a process of sending the third data frame is similar to the foregoing process of sending the second data frame, a process of sending the second data frame is similar to the foregoing process of sending the first data frame, and details are not repeated.

In embodiments of this application, the indicator bit has different meanings when being set to different values, so that a high-priority data frame can be preferentially scheduled and transmitted. This can reduce a transmission delay and jitter of the high-priority data frame.

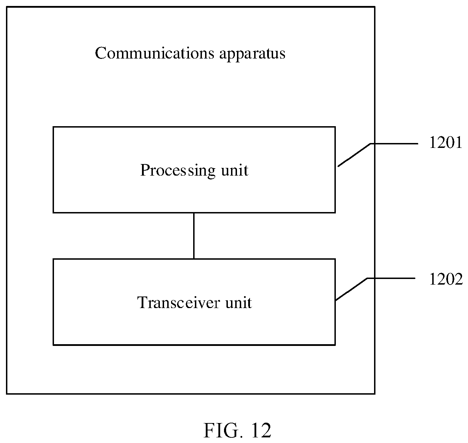

Based on a same technical concept of the method embodiments, an embodiment of this application provides a communications apparatus. A structure of the apparatus may be shown in FIG. 12, and includes a processing unit 1201 and a transceiver unit 1202.

In an implementation, the communications apparatus may be specifically configured to implement the method performed by the sending node in the embodiments in FIG. 1 to FIG. 11. The apparatus may be the sending node, or may be a chip or a chip set in the sending node, or a part of a chip that is configured to perform a related method function. The transceiver unit 1202 is configured to receive and send information. The processing unit 1201 is configured to: send N1 first data packets in a first data frame via the transceiver unit 1202; and when a first condition is met, send M second data packets in a second data frame via the transceiver unit 1202 before sending N2 first data packets in the first data frame via the transceiver unit 1202. The first condition includes that a priority of the second data frame is higher than a priority of the first data frame. The first data frame includes the N1 first data packets and the N2 first data packets, and N1, N2, and M are positive integers.

Optionally, the first condition further includes that data frame truncation is enabled.

Optionally, when a second condition is met, the M second data packets in the second data frame are sent after the N2 first data packets are sent. The second condition includes that the data frame truncation is disabled and/or the priority of the first data frame is not lower than the priority of the first data frame.

For example, the first data packet includes an indicator bit and a payload, where the payload of the first data packet carries one of a start fragment, an intermediate fragment, or an end fragment of the first data frame, and the indicator bit of the first data packet indicates one of the start fragment, the intermediate fragment, or the end fragment of the first data frame; and the second data packet includes an indicator bit and a payload, where the payload of the second data packet carries one of a start fragment, an intermediate fragment, or an end fragment of the second data frame, and the indicator bit of the second data packet indicates one of the start fragment, the intermediate fragment, or the end fragment of the first data frame.

For example, an indicator bit of a 1^{st} first data packet in the N1 first data packets indicates that the 1^{st} first data packet is a start fragment, indicator bits of 2^{nd} to N1^{th} first data packets in the N1 first data packets and 1^{st} to (N2-1)^{th} first data packets in the N2 first data packets indicate that the first data packets are intermediate fragments, and an indicator bit of an N2^{th} first data packet in the N2 first data packets indicates that the N2^{th} first data packet is an end fragment; and an indicator bit of a 1^{st} second data packet in the M second data packets indicates that the 1^{st} second data packet is a start fragment, indicator bits of 2^{nd} to (M-1)^{th} second data packets indicate that the second data packets are intermediate fragments, and an indicator bit of an M^{th} second data packet indicates that the M^{th} second data packet is an end fragment.

For example, an indicator bit of a 1^{st} first data packet in the N1 first data packets indicates that the 1^{st} first data packet is a start/end fragment of a low-priority data frame, an indicator bit of an N2^{th} first data packet in the N2 first data packets indicates that the N2^{th} first data packet is a start/end fragment of the low-priority data frame, and indicator bits of 2^{nd} to N1^{th} first data packets in the N1 first data packets and 1^{st} to (N2-1)^{th} first data packets in the N2 first data packets indicate that the first data packets are intermediate fragments; and an indicator bit of a 1^{st} second data packet in the M second data packets indicates that the 1^{st} second data packet is a start/end fragment of a high-priority data frame, an indicator bit of an M^{th} second data packet indicates that the M^{th} second data packet is a start/end fragment of the high-priority data frame, and indicator bits of 2^{nd} to (M-1)^{th} second data packets in the M second data packets indicate that the second data packets are intermediate fragments.

For example, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments; and a 1^{st} second data packet in the M second data packets indicates that the 1^{st} second data packet is a start fragment of a high-priority data frame, and indicator bits of 2^{nd} to M^{th} second data packets indicate that the second data packets are intermediate fragments.

Optionally, the processing unit 1201 is further configured to: send a third data packet after sending the M second data packets in the second data frame via the transceiver unit 1202, where the third data packet includes an indicator bit and a payload, the indicator bit of the third data packet indicates that the third data packet is non-data information, and the payload of the third data packet indicates that data frame transmission ends; and send a fourth data packet after sending the N2 first data packets in the first data frame via the transceiver unit 1202, where the fourth data packet includes an indicator bit and a payload, the indicator bit of the fourth data packet indicates that the fourth data packet is non-data information, and the payload of the fourth data packet indicates that data frame transmission ends.

For example, an indicator bit of a 1^{st} first data packet in the N1 first data packets indicates that the 1^{st} first data packet is a start fragment of a low-priority data frame, a payload of the 1^{st} first data packet indicates a length of the first data frame, and indicator bits of 2^{nd} to N1^{th} first data packets in the N1 first data packets and indicator bits of the N2 first data packets indicate that the first data packets are intermediate fragments; and an indicator bit of a 1^{st} second data packet in the M second data packets indicates that the 1^{st} second data packet is a start fragment of a high-priority data frame, a payload of the 1^{st} second data packet indicates a length of the second data frame, and indicator bits of 2^{nd} to M^{th} second data packets in the M second data packets indicate that the second data packets are intermediate fragments.

Optionally, the processing unit 1201 is further configured to send K fifth data packets that are non-data information via the transceiver unit 1202, where the fifth data packet includes an indicator bit and a payload, the indicator bit of the fifth data packet indicates that the fifth data packet is the non-data information, the payload of the fifth data packet carries a fragment of the non-data information, and K is an integer greater than 0.

For example, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments of the low-priority data frame; and an indicator bit of a 1^{st} second data packet in the M second data packets indicates that the 1^{st} second data packet is a start fragment of a high-priority data frame, and indicator bits of 2^{nd} to M^{th} second data packets in the M second data packets indicate that the second data packets are intermediate fragments of the high-priority data frame.

For example, the high-priority data frame is a data information frame or a non-data information frame.

Optionally, the processing unit 1201 is further configured to send a sixth data packet carrying non-data information via the transceiver unit 1202, where the sixth data packet includes an indicator bit and a payload, the indicator bit of the sixth data packet indicates that the sixth data packet is a start fragment of a high-priority data frame, and the payload of the sixth data packet indicates that the sixth data packet is a non-data information frame.

In an implementation, the communications apparatus may be specifically configured to implement the method performed by the receiving node in the embodiments in FIG. 1 to FIG. 11. The apparatus may be the receiving node, or may be a chip or a chip set in the receiving node, or a part of a chip that is configured to perform a related method function. The transceiver unit 1202 is configured to: receive N1 first data packets; and when a first condition is met, receive M second data packets before receiving N2 first data packets, where the first condition includes that a priority of a second data frame is higher than a priority of a first data frame, and N1, N2, and M are positive integers; and the processing unit 1201 is configured to determine the first data frame based on the N1 first data packets and the N2 first data packets; and determine the second data frame based on the M second data packets.

Optionally, the first condition further includes that data frame truncation is enabled.

Optionally, when a second condition is met, the M second data packets are received after the N2 first data packets are received, where the second condition includes that the data frame truncation is disabled and/or the priority of the first data frame is not lower than the priority of the first data frame.

For example, the first data packet includes an indicator bit and a payload, where the payload of the first data packet carries one of a start fragment, an intermediate fragment, or an end fragment of the first data frame, and the indicator bit of the first data packet indicates one of the start fragment, the intermediate fragment, or the end fragment of the first data frame; and the second data packet includes an indicator bit and a payload, where the payload of the second data packet carries one of a start fragment, an intermediate fragment, or an end fragment of the second data frame, and the indicator bit of the second data packet indicates one of the start fragment, the intermediate fragment, or the end fragment of the first data frame.

For example, an indicator bit of a 1^{st} first data packet in the N1 first data packets indicates that the 1^{st} first data packet is a start fragment, indicator bits of 2^{nd} to N1^{th} first data packets in the N1 first data packets and 1^{st} to (N2-1)^{th} first data packets in the N2 first data packets indicate that the first data packets are intermediate fragments, and an indicator bit of an N2^{th} first data packet in the N2 first data packets indicates that the N2^{th} first data packet is an end fragment; and an indicator bit of a 1^{st} second data packet in the M second data packets indicates that the 1^{st} second data packet is a start fragment, indicator bits of 2^{nd} to (M-1)^{th} second data packets indicate that the second data packets are intermediate fragments, and an indicator bit of an M^{th} second data packet indicates that the M^{th} second data packet is an end fragment.

For example, an indicator bit of a 1^{st} first data packet in the N1 first data packets indicates that the 1^{st} first data packet is a start/end fragment of a low-priority data frame, an indicator bit of an N2^{th} first data packet in the N2 first data packets indicates that the N2^{th} first data packet is a start/end fragment of the low-priority data frame, and indicator bits of 2^{nd} to N1^{th} first data packets in the N1 first data packets and 1^{st} to (N2-1)^{th} first data packets in the N2 first data packets indicate that the first data packets are intermediate fragments; and an indicator bit of a 1^{st} second data packet in the M second data packets indicates that the 1^{st} second data packet is a start/end fragment of a high-priority data frame, an indicator bit of an M^{th} second data packet indicates that the M^{th} second data packet is a start/end fragment of the high-priority data frame, and indicator bits of 2^{nd} to (M-1)^{th} second data packets in the M second data packets indicate that the second data packets are intermediate fragments.

For example, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments; and a 1^{st} second data packet in the M second data packets indicates that the 1^{st} second data packet is a start fragment of a high-priority data frame, and indicator bits of 2^{nd} to M^{th} second data packets indicate that the second data packets are intermediate fragments.

Optionally, the transceiver unit 1202 is further configured to: receive a third data packet after receiving the M second data packets, where the third data packet includes an indicator bit and a payload, the indicator bit of the third data packet indicates that the third data packet is non-data information, and the payload of the third data packet indicates that data frame transmission ends; and receive a fourth data packet after receiving the N2 first data packets, where the fourth data packet includes an indicator bit and a payload, the indicator bit of the fourth data packet indicates that the fourth data packet is non-data information, and the payload of the fourth data packet indicates that data frame transmission ends.

For example, an indicator bit of a 1^{st} first data packet in the N1 first data packets indicates that the 1^{st} first data packet is a start fragment of a low-priority data frame, a payload of the 1^{st} first data packet indicates a length of the first data frame, and indicator bits of 2^{nd} to N1^{th} first data packets in the N1 first data packets and indicator bits of the N2 first data packets indicate that the first data packets are intermediate fragments; and an indicator bit of a 1^{st} second data packet in the M second data packets indicates that the 1^{st} second data packet is a start fragment of a high-priority data frame, a payload of the 1^{st} second data packet indicates a length of the second data frame, and indicator bits of 2^{nd} to M^{th} second data packets in the M second data packets indicate that the second data packets are intermediate fragments.

For example, the transceiver unit 1202 is further configured to: receive K fifth data packets, where each of the K fifth data packets includes an indicator bit and a payload, the indicator bit of each of the K fifth data packets indicates that the fifth data packet is non-data information, K is an integer greater than 0, and the payload of the fifth data packet carries a fragment of the non-data information; and determine the non-data information based on the K fifth data packets.

For example, an indicator bit of a 1^{st} first data packet in the N1 first data packets indicates that the 1^{st} first data packet is a start fragment of a low-priority data frame, and indicator bits of 2^{nd} to N1^{th} first data packets in the N1 first data packets and indicator bits of the N2 first data packets indicate that the first data packets are intermediate fragments of the low-priority data frame; and an indicator bit of a 1^{st} second data packet in the M second data packets indicates that the 1^{st} second data packet is a start fragment of a high-priority data frame, and indicator bits of 2^{nd} to M^{th} second data packets in the M second data packets indicate that the second data packets are intermediate fragments of the high-priority data frame.

For example, the high-priority data frame is a data information frame or a non-data information frame.

Optionally, the transceiver unit 1202 is further configured to: receive a sixth data packet, where the sixth data packet includes an indicator bit and a payload, the indicator bit of the sixth data packet indicates that the sixth data packet is a start fragment of a high-priority data frame, and the payload of the sixth data packet indicates that the sixth data packet is a non-data information frame; and determine non-data information based on the sixth data packet.

Division into modules in this embodiment of this application is an example, is merely logical function division, and may be other division during actual implementation. In addition, functional modules in embodiments of this application may be integrated into one processor, or each of the modules may exist alone physically, or two or more modules are integrated into one module. The integrated module may be implemented in a form of hardware, or may be implemented in a form of a software functional module. It may be understood that for functions or implementations of the modules in this embodiment of this application, further refer to related description in the method embodiments.

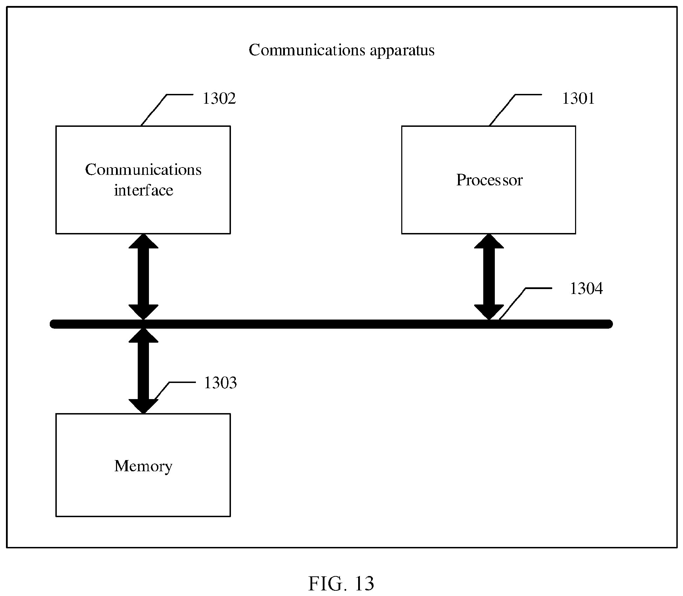

In a possible manner, the communications apparatus may be shown in FIG. 13, and the apparatus may be a sending node or a chip in a sending node. The apparatus may include a processor 1301, a communications interface 1302, and a memory 1303. The processing unit 1201 may be the processor 1301. The transceiver unit 1202 may be the communications interface 1302.

The processor 1301 may be a central processing unit (Central Processing Unit, CPU), a digital processing unit, or the like. The communications interface 1302 may be a transceiver, an interface circuit like a transceiver circuit, a transceiver chip, or the like. The apparatus further includes the memory 1303, configured to store a program executed by the processor 1301. The memory 1303 may be a nonvolatile memory such as a hard disk drive (hard disk drive, HDD) or a solid-state drive (solid-state drive, SSD), or may be a volatile memory (volatile memory) such as a random access memory (random access memory, RAM). The memory 1303 is any other medium that can be used to carry or store expected program code in a form of an instruction or a data structure and that can be accessed by a computer, but is not limited thereto.

The processor 1301 is configured to execute the program code stored in the memory 1303, and is specifically configured to perform an action of the processing unit 1201. Details are not described herein again in this application. The communications interface 1302 is specifically configured to perform an action of the transceiver unit 1202. Details are not described in this application again.

A specific connection medium among the communications interface 1302, the processor 1301, and the memory 1303 is not limited in this embodiment of this application. In this embodiment of this application, the memory 1303, the processor 1301, and the communications interface 1302 are connected through a bus 1304 in FIG. 13. In FIG. 13, the bus is indicated by using a bold line. A manner of connection between other components is merely an example for description, and imposes no limitation. The bus may be classified into an address bus, a data bus, a control bus, and the like. For ease of representation, only one bold line is used to represent the bus in FIG. 13, but this does not mean that there is only one bus or only one type of bus.

An embodiment of this application further provides a communications system, including a communications apparatus configured to implement functions of the sending node in embodiments in FIG. 1 and FIG. 11 and a communications apparatus configured to implement functions of the receiving node in embodiments in FIG. 1 and FIG. 11.

An embodiment of this application further provides a computer-readable storage medium, configured to store computer software instructions that need to be executed by the processor, and the computer software instructions include a program that needs to be executed by the processor.

An embodiment of this application further provides a vehicle. The vehicle includes a first device and/or a second device. The first device and the second device are configured to separately or jointly implement the information transmission method in FIG. 1. For example, the first device and the second device may be the communications apparatus shown in FIG. 12.

An embodiment of this application further provides a chip. The chip includes at least one processor and a communications interface. The processor is coupled to a memory, and is configured to read a computer program stored in the memory, to perform the method shown in FIG. 1 or implement the functions in the embodiments in FIG. 2 to FIG. 11.

An embodiment of this application further provides a chip, including a communications interface and at least one processor. The processor runs to perform the method shown in FIG. 1 or implement the functions in the embodiments in FIG. 2 to FIG. 11.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

## Claims

1. An information transmission method, wherein the method comprises:
sending (S101) N1 first data packets in a first data frame; and
when a first condition is met, sending (S102) M second data packets in a second data frame before N2 first data packets in the first data frame are sent (S103), wherein
the first condition comprises that a priority of the second data frame is higher than a priority of the first data frame; and
the first data frame comprises the N1 first data packets and the N2 first data packets, and N1, N2, and M are positive integers;
**characterized in that**
the first data packet comprises indicator bits and a payload, wherein the payload of the first data packet carries one of a start fragment, an intermediate fragment, or an end fragment of the first data frame, and the indicator bits of the first data packet indicate one of the start fragment, the intermediate fragment, or the end fragment of the first data frame; and
the second data packet comprises indicator bits and a payload, wherein the payload of the second data packet carries one of a start fragment, an intermediate fragment, or an end fragment of the second data frame, and the indicator bits of the second data packet indicate one of the start fragment, the intermediate fragment, or the end fragment of the second data frame.

2. The method according to claim 1, wherein when a second condition is met, the M second data packets in the second data frame are sent after the N2 first data packets are sent, wherein
the second condition comprises that the data frame truncation is disabled and/or the priority of the first data frame is not lower than the priority of the second data frame.

3. The method according to claim 1 or 2, wherein
a first value of the indicator bits of the first data packet indicates the payload comprised in the first data packet comprising the indicator bits whose value is the first value is a start fragment of the first data frame;
a second value of the indicator bits of the first data packet indicates the payload comprised in the first data packet comprising the indicator bits whose value is the second value is an intermediate fragment of the first data frame;
a third value of the indicator bits of the first data packet indicates the payload comprised in the first data packet comprising the indicator bits whose value is the third value is an end fragment of the first data frame;
a fourth value of the indicator bits of the first data packet indicates the payload comprised in the first data packet comprising the indicator bits whose value is the fourth value carries non-data information.

4. The method according to claim 1 or 2, wherein
a first value of the indicator bits of the second data packet indicates the payload comprised in the second data packet comprising the indicator bits whose value is the first value is a start fragment of the second data frame;
a second value of the indicator bits of the second data packet indicates the payload comprised in the second data packet comprising the indicator bits whose value is the second value is an intermediate fragment of the second data frame;
a third value of the indicator bits of the second data packet indicates the payload comprised in the second data packet comprising the indicator bits whose value is the third value is an end fragment of the second data frame;
a fourth value of the indicator bits of the second data packet indicates the payload comprised in the second data packet comprising the indicator bits whose value is the fourth value carries non-data information.

5. The method according to claim 1 or 2, wherein indicator bits of a 1^{st} first data packet in the N1 first data packets indicate that the 1^{st} first data packet is a start fragment, indicator bits of 2^{nd} to N1^{th} first data packets in the N1 first data packets and 1^{st} to (N2-1)^{th} first data packets in the N2 first data packets indicate that the first data packets are intermediate fragments, and indicator bits of an N2^{th} first data packet in the N2 first data packets indicate that the N2^{th} first data packet is an end fragment; and
indicator bits of a 1^{st} second data packet in the M second data packets indicate that the 1^{st} second data packet is a start fragment, indicator bits of 2^{nd} to (M-1)^{th} second data packets indicate that the second data packets are intermediate fragments, and indicator bits of an M^{th} second data packet indicate that the M^{th} second data packet is an end fragment.

6. The method according to any one of claims 1 to 5, wherein the method further comprises:
sending K fifth data packets, wherein the fifth data packet comprises indicator bits and a payload, the indicator bits of the fifth data packet indicate that the fifth data packet is non-data information, the payload of the fifth data packet carries a fragment of the non-data information, and K is an integer greater than 0.

7. An information transmission method, wherein the method comprises:
receiving (S101) N1 first data packets in a first data frame;
receiving (S102) M second data packets in a second data frame before N2 first data packets in the first data frame are received (S103), wherein the first data frame comprises the N1 first data packets and the N2 first data packets, and N1, N2, and M are positive integers;
determining (S104) the first data frame based on the N1 first data packets and the N2 first data packets; and
determining (S105) the second data frame based on the M second data packets, wherein a priority of the second data frame is higher than a priority of the first data frame;
**characterized in that**
the first data packet comprises indicator bits and a payload, wherein the payload of the first data packet carries one of a start fragment, an intermediate fragment, or an end fragment of the first data frame, and the indicator bits of the first data packet indicate one of the start fragment, the intermediate fragment, or the end fragment of the first data frame; and
the second data packet comprises indicator bits and a payload, wherein the payload of the second data packet carries one of a start fragment, an intermediate fragment, or an end fragment of the second data frame, and the indicator bits of the second data packet indicate one of the start fragment, the intermediate fragment, or the end fragment of the first data frame.

8. The method according to claim 7, wherein
a first value of the indicator bits of the first data packet indicates the payload comprised in the first data packet comprising the indicator bits whose value is the first value is a start fragment of the first data frame;
a second value of the indicator bits of the first data packet indicates the payload comprised in the first data packet comprising the indicator bits whose value is the second value is an intermediate fragment of the first data frame;
a third value of the indicator bits of the first data packet indicates the payload comprised in the first data packet comprising the indicator bits whose value is the third value is an end fragment of the first data frame;
a fourth value of the indicator bits of the first data packet indicates the payload comprised in the first data packet comprising the indicator bits whose value is the fourth value carries non-data information.

9. The method according to 7 or 8, wherein
a first value of the indicator bits of the second data packet indicates the payload comprised in the second data packet comprising the indicator bits whose value is the first value is a start fragment of the second data frame;
a second value of the indicator bits of the second data packet indicates the payload comprised in the second data packet comprising the indicator bits whose value is the second value is an intermediate fragment of the second data frame;
a third value of the indicator bits of the second data packet indicates the payload comprised in the second data packet comprising the indicator bits whose value is the third value is an end fragment of the second data frame;
a fourth value of the indicator bits of the second data packet indicates the payload comprised in the second data packet comprising the indicator bits whose value is the fourth value carries non-data information.

10. The method according to any one of claims 7 to 9, wherein indicator bits of a 1^{st} first data packet in the N1 first data packets indicate that the 1^{st} first data packet is a start fragment, indicator bitss of 2^{nd} to N1^{th} first data packets in the N1 first data packets and 1^{st} to (N2-1)^{th} first data packets in the N2 first data packets indicate that the first data packets are intermediate fragments, and indicator bits of an N2^{th} first data packet in the N2 first data packets indicate that the N2^{th} first data packet is an end fragment; and
indicator bits of a 1^{st} second data packet in the M second data packets indicate that the 1^{st} second data packet is a start fragment, indicator bitss of 2^{nd} to (M-1)^{th} second data packets indicate that the second data packets are intermediate fragments, and indicator bits of an M^{th} second data packet indicate that the M^{th} second data packet is an end fragment.

11. The method according to any one of claims 7 to 10, wherein the method further comprises:
receiving K fifth data packets, wherein the fifth data packet comprises indicator bits and a payload, the indicator bits of the fifth data packet indicate that the fifth data packet is non-data information, the payload of the fifth data packet carries a fragment of the non-data information, and K is an integer greater than 0.

12. An information transmission apparatus, wherein the apparatus is configured to perform the method according to any one of claims 1 to 6.

13. An information transmission apparatus, wherein the apparatus is configured to perform the method according to any one of claims 7 to 11.

14. A computer-readable storage medium, wherein the computer-readable storage medium stores a program or instructions, and when the program or the instructions are read and executed by one or more processors, the method according to any one of claims 1 to 6 is implemented, or when the program or the instructions are read and executed by one or more processors, the method according to any one of claims 7 to 11 is implemented.

15. A vehicle, wherein the vehicle comprises a first device and/or a second device, the first device is the information transmission apparatus according to claim 12, and the second device is the information transmission apparatus according to claim 13.

16. An information transmission system, wherein the system comprises a first device and a second device, wherein the first device is the information transmission apparatus according to claim 12 and the second device is the information transmission apparatus according to claim 13.

## Patentansprüche

1. Informationsübertragungsverfahren, wobei das Verfahren Folgendes umfasst:
Senden (S101) von N1 ersten Datenpaketen in einem ersten Datenrahmen; und
wenn eine erste Bedingung erfüllt ist, Senden (S102) von M zweiten Datenpaketen in einem zweiten Datenrahmen, bevor N2 erste Datenpakete in dem ersten Datenrahmen gesendet werden (S103), wobei
die erste Bedingung umfasst, dass eine Priorität des zweiten Datenrahmens höher ist als eine Priorität des ersten Datenrahmens; und
der erste Datenrahmen die N1 ersten Datenpakete und die N2 ersten Datenpakete umfasst und N1, N2 und M positive ganze Zahlen sind; **dadurch gekennzeichnet, dass**
das erste Datenpaket Indikatorbits und eine Nutzlast umfasst, wobei die Nutzlast des ersten Datenpakets eines von einem Startfragment, einem Zwischenfragment oder einem Endfragment des ersten Datenrahmens trägt, und die Indikatorbits des ersten Datenpakets eines von dem Startfragment, dem Zwischenfragment oder dem Endfragment des ersten Datenrahmens anzeigen; und
das zweite Datenpaket Indikatorbits und eine Nutzlast umfasst, wobei die Nutzlast des zweiten Datenpakets eines von einem Startfragment, einem Zwischenfragment oder einem Endfragment des zweiten Datenrahmens trägt, und die Indikatorbits des zweiten Datenpakets eines von dem Startfragment, dem Zwischenfragment oder dem Endfragment des zweiten Datenrahmens anzeigen.

2. Verfahren nach Anspruch 1, wobei, wenn eine zweite Bedingung erfüllt ist, die M zweiten Datenpakete in dem zweiten Datenrahmen gesendet werden, nachdem die N2 ersten Datenpakete gesendet wurden, wobei
die zweite Bedingung umfasst, dass die Trunkierung des Datenrahmens deaktiviert ist und/oder die Priorität des ersten Datenrahmens nicht niedriger ist als die Priorität des zweiten Datenrahmens.

3. Verfahren nach Anspruch 1 oder 2, wobei
ein erster Wert der Indikatorbits des ersten Datenpakets anzeigt, dass die in dem ersten Datenpaket umfasste Nutzlast, die die Indikatorbits umfasst, deren Wert der erste Wert ist, ein Startfragment des ersten Datenrahmens ist;
ein zweiter Wert der Indikatorbits des ersten Datenpakets anzeigt, dass die in dem ersten Datenpaket umfasste Nutzlast, die die Indikatorbits umfasst, deren Wert der zweite Wert ist, ein Zwischenfragment des ersten Datenrahmens ist;
ein dritter Wert der Indikatorbits des ersten Datenpakets anzeigt, dass die in dem ersten Datenpaket umfasste Nutzlast, die die Indikatorbits umfasst, deren Wert der dritte Wert ist, ein Endfragment des ersten Datenrahmens ist;
ein vierter Wert der Indikatorbits des ersten Datenpakets anzeigt, dass die in dem ersten Datenpaket umfasste Nutzlast, die die Indikatorbits umfasst, deren Wert der vierte Wert ist, Nichtdateninformationen trägt.

4. Verfahren nach Anspruch 1 oder 2, wobei
ein erster Wert der Indikatorbits des zweiten Datenpakets anzeigt, dass die in dem zweiten Datenpaket umfasste Nutzlast, die die Indikatorbits umfasst, deren Wert der erste Wert ist, ein Startfragment des zweiten Datenrahmens ist;
ein zweiter Wert der Indikatorbits des zweiten Datenpakets anzeigt, dass die in dem zweiten Datenpaket umfasste Nutzlast, die die Indikatorbits umfasst, deren Wert der zweite Wert ist, ein Zwischenfragment des zweiten Datenrahmens ist;
ein dritter Wert der Indikatorbits des zweiten Datenpakets anzeigt, dass die in dem zweiten Datenpaket umfasste Nutzlast, die die Indikatorbits umfasst, deren Wert der dritte Wert ist, ein Endfragment des zweiten Datenrahmens ist;
ein vierter Wert der Indikatorbits des zweiten Datenpakets anzeigt, dass die in dem zweiten Datenpaket umfasste Nutzlast, die die Indikatorbits umfasst, deren Wert der vierte Wert ist, Nichtdateninformationen trägt.

5. Verfahren nach Anspruch 1 oder 2, wobei Indikatorbits eines 1^{ten} ersten Datenpakets in den N1 ersten Datenpaketen anzeigen, dass das 1^{te} erste Datenpaket ein Startfragment ist, Indikatorbits des 2^{ten} bis N1^{ten} ersten Datenpakets in den N1 ersten Datenpaketen und des 1^{ten} bis (N2-1)^{ten} ersten Datenpakets in den N2 ersten Datenpaketen anzeigen, dass die ersten Datenpakete Zwischenfragmente sind, und Indikatorbits eines N2^{ten} ersten Datenpakets in den N2 ersten Datenpaketen anzeigen, dass das N2^{te} erste Datenpaket ein Endfragment ist; und
Indikatorbits eines 1^{ten} zweiten Datenpakets in den M zweiten Datenpaketen anzeigen, dass das 1^{te} zweite Datenpaket ein Startfragment ist, Indikatorbits des 2^{ten} bis (M-1)^{ten} zweiten Datenpakets anzeigen, dass die zweiten Datenpakete Zwischenfragmente sind, und Indikatorbits eines M^{ten} zweiten Datenpakets anzeigen, dass das M^{te} zweite Datenpaket ein Endfragment ist.

6. Verfahren nach einem der Ansprüche 1 bis 5, wobei das Verfahren ferner Folgendes umfasst:
Senden von K fünften Datenpaketen, wobei das fünfte Datenpaket Indikatorbits und eine Nutzlast umfasst, die Indikatorbits des fünften Datenpakets anzeigen, dass es sich bei dem fünften Datenpaket um Nichtsateninformationen handelt, die Nutzlast des fünften Datenpakets ein Fragment der Nicht-Daten-Informationen enthält und K eine ganze Zahl größer als 0 ist.

7. Informationsübertragungsverfahren, wobei das Verfahren Folgendes umfasst:
Empfangen (S101) von N1 ersten Datenpaketen in einem ersten Datenrahmen;
Empfangen (S102) von M zweiten Datenpaketen in einem zweiten Datenrahmen, bevor N2 erste Datenpakete in dem ersten Datenrahmen empfangen werden (S103), wobei der erste Datenrahmen die N1 ersten Datenpakete und die N2 ersten Datenpakete umfasst und N1, N2 und M positive ganze Zahlen sind;
Bestimmen (S104) des ersten Datenrahmens basierend auf den N1 ersten Datenpaketen und den N2 ersten Datenpaketen; und
Bestimmen (S105) des zweiten Datenrahmens basierend auf den M zweiten Datenpaketen, wobei eine Priorität des zweiten Datenrahmens höher ist als eine Priorität des ersten Datenrahmens;
**dadurch gekennzeichnet, dass**
das erste Datenpaket Indikatorbits und eine Nutzlast umfasst, wobei die Nutzlast des ersten Datenpakets eines von einem Startfragment, einem Zwischenfragment oder einem Endfragment des ersten Datenrahmens trägt, und die Indikatorbits des ersten Datenpakets eines von dem Startfragment, dem Zwischenfragment oder dem Endfragment des ersten Datenrahmens anzeigen; und
das zweite Datenpaket Indikatorbits und eine Nutzlast umfasst, wobei die Nutzlast des zweiten Datenpakets eines von einem Startfragment, einem Zwischenfragment oder einem Endfragment des zweiten Datenrahmens trägt, und die Indikatorbits des zweiten Datenpakets eines von dem Startfragment, dem Zwischenfragment oder dem Endfragment des ersten Datenrahmens anzeigen.

8. Verfahren nach Anspruch 7 wobei
ein erster Wert der Indikatorbits des ersten Datenpakets anzeigt, dass die in dem ersten Datenpaket umfasste Nutzlast, die die Indikatorbits umfasst, deren Wert der erste Wert ist, ein Startfragment des ersten Datenrahmens ist;
ein zweiter Wert der Indikatorbits des ersten Datenpakets anzeigt, dass die in dem ersten Datenpaket umfasste Nutzlast, die die Indikatorbits umfasst, deren Wert der zweite Wert ist, ein Zwischenfragment des ersten Datenrahmens ist;
ein dritter Wert der Indikatorbits des ersten Datenpakets anzeigt, dass die in dem ersten Datenpaket umfasste Nutzlast, die die Indikatorbits umfasst, deren Wert der dritte Wert ist, ein Endfragment des ersten Datenrahmens ist;
ein vierter Wert der Indikatorbits des ersten Datenpakets anzeigt, dass die in dem ersten Datenpaket umfasste Nutzlast, die die Indikatorbits umfasst, deren Wert der vierte Wert ist, Nichtdateninformationen trägt.

9. Verfahren nach 7 oder 8, wobei
ein erster Wert der Indikatorbits des zweiten Datenpakets anzeigt, dass die in dem zweiten Datenpaket umfasste Nutzlast, die die Indikatorbits umfasst, deren Wert der erste Wert ist, ein Startfragment des zweiten Datenrahmens ist;
ein zweiter Wert der Indikatorbits des zweiten Datenpakets anzeigt, dass die in dem zweiten Datenpaket umfasste Nutzlast, die die Indikatorbits umfasst, deren Wert der zweite Wert ist, ein Zwischenfragment des zweiten Datenrahmens ist;
ein dritter Wert der Indikatorbits des zweiten Datenpakets anzeigt, dass die in dem zweiten Datenpaket umfasste Nutzlast, die die Indikatorbits umfasst, deren Wert der dritte Wert ist, ein Endfragment des zweiten Datenrahmens ist;
ein vierter Wert der Indikatorbits des zweiten Datenpakets anzeigt, dass die in dem zweiten Datenpaket umfasste Nutzlast, die die Indikatorbits umfasst, deren Wert der vierte Wert ist, Nichtdateninformationen trägt.

10. Verfahren nach einem der Ansprüche 7 bis 9, wobei Indikatorbits eines 1^{ten} ersten Datenpakets in den N1 ersten Datenpaketen anzeigen, dass das 1^{te} erste Datenpaket ein Startfragment ist, Indikatorbits des 2^{ten} bis N1^{ten} ersten Datenpakets in den N1 ersten Datenpaketen und des 1^{ten} bis (N2-1)^{ten} ersten Datenpakets in den N2 ersten Datenpaketen anzeigen, dass die ersten Datenpakete Zwischenfragmente sind, und Indikatorbits eines N2^{ten} ersten Datenpakets in den N2 ersten Datenpaketen anzeigen, dass das N2^{te} erste Datenpaket ein Endfragment ist; und
Indikatorbits eines 1^{ten} zweiten Datenpakets in den M zweiten Datenpaketen anzeigen, dass das 1^{te} zweite Datenpaket ein Startfragment ist, Indikatorbits des 2^{ten} bis (M-1)^{ten} zweiten Datenpakets anzeigen, dass die zweiten Datenpakete Zwischenfragmente sind, und Indikatorbits eines M^{ten} zweiten Datenpakets anzeigen, dass das M^{te} zweite Datenpaket ein Endfragment ist.

11. Verfahren nach einem der Ansprüche 7 bis 10, wobei das Verfahren ferner Folgendes umfasst:
Empfangen von K fünften Datenpaketen, wobei das fünfte Datenpaket Indikatorbits und eine Nutzlast umfasst, die Indikatorbits des fünften Datenpakets anzeigen, dass es sich bei dem fünften Datenpaket um Nichtsateninformationen handelt, die Nutzlast des fünften Datenpakets ein Fragment der Nicht-Daten-Informationen enthält und K eine ganze Zahl größer als 0 ist.

12. Informationsübertragungsvorrichtung, wobei die Vorrichtung dazu ausgelegt ist, das Verfahren nach einem der Ansprüche 1 bis 6 durchzuführen.

13. Informationsübertragungsvorrichtung, wobei die Vorrichtung dazu ausgelegt ist, das Verfahren nach einem der Ansprüche 7 bis 11 durchzuführen.

14. Computerlesbares Speichermedium, wobei das computerlesbare Speichermedium ein Programm oder Anweisungen speichert, und wenn das Programm oder die Anweisungen durch einen oder mehrere Prozessoren gelesen und ausgeführt werden, wird das Verfahren nach einem der Ansprüche 1 bis 6 implementiert, oder wenn das Programm oder die Anweisungen gelesen und durch einen oder mehrere Prozessoren ausgeführt werden, wird das Verfahren nach einem der Ansprüche 7 bis 11 implementiert.

15. Fahrzeug, wobei das Fahrzeug ein erstes Gerät und/oder ein zweites Gerät umfasst, das erste Gerät die Informationsübertragungsvorrichtung nach Anspruch 12 ist und das zweite Gerät die Informationsübertragungsvorrichtung nach Anspruch 13 ist.

16. Informationsübertragungssystem, wobei das System ein erstes Gerät und ein zweites Gerät umfasst, wobei das erste Gerät die Informationsübertragungsvorrichtung nach Anspruch 12 ist und das zweite Gerät die Informationsübertragungsvorrichtung nach Anspruch 13 ist.

## Revendications

1. Procédé de transmission d'informations, dans lequel le procédé comprend :
l'envoi (S101) de N1 premiers paquets de données dans une première trame de données ; et
lorsqu'une première condition est remplie, l'envoi (S102) de M seconds paquets de données dans une seconde trame de données avant que N2 premiers paquets de données dans la première trame de données ne soient envoyés (S103), dans lequel
la première condition comprend qu'une priorité de la seconde trame de données est supérieure à une priorité de la première trame de données ; et
la première trame de données comprend les N1 premiers paquets de données et les N2 premiers paquets de données, et N1, N2 et M sont des entiers positifs ;
**caractérisé en ce que**
le premier paquet de données comprend des bits indicateurs et une charge utile, dans lequel la charge utile du premier paquet de données transporte l'un d'un fragment de départ, d'un fragment intermédiaire ou d'un fragment de fin de la première trame de données, et les bits indicateurs du premier paquet de données indiquent l'un du fragment de départ, du fragment intermédiaire ou du fragment de fin de la première trame de données ; et
le second paquet de données comprend des bits indicateurs et une charge utile, dans lequel la charge utile du second paquet de données transporte l'un d'un fragment de départ, d'un fragment intermédiaire ou d'un fragment de fin de la seconde trame de données, et les bits indicateurs du second paquet de données indiquent l'un du fragment de départ, du fragment intermédiaire ou du fragment de fin de la seconde trame de données.

2. Procédé selon la revendication 1, dans lequel, lorsqu'une seconde condition est remplie, les M seconds paquets de données dans la seconde trame de données sont envoyés après que les N2 premiers paquets de données ont été envoyés, dans lequel
la seconde condition comprend que la troncature de trame de données est désactivée et/ou que la priorité de la première trame de données n'est pas inférieure à la priorité de la seconde trame de données.

3. Procédé selon la revendication 1 ou 2, dans lequel
une première valeur des bits indicateurs du premier paquet de données indique que la charge utile comprise dans le premier paquet de données comprenant les bits indicateurs dont la valeur est la première valeur est un fragment de départ de la première trame de données ;
une deuxième valeur des bits indicateurs du premier paquet de données indique que la charge utile comprise dans le premier paquet de données comprenant les bits indicateurs dont la valeur est la deuxième valeur est un fragment intermédiaire de la première trame de données ;
une troisième valeur des bits indicateurs du premier paquet de données indique que la charge utile comprise dans le premier paquet de données comprenant les bits indicateurs dont la valeur est la troisième valeur est un fragment de fin de la première trame de données ;
une quatrième valeur des bits indicateurs du premier paquet de données indique que la charge utile comprise dans le premier paquet de données comprenant les bits indicateurs dont la valeur est la quatrième valeur transporte des informations ne constituant pas des données.

4. Procédé selon la revendication 1 ou 2, dans lequel
une première valeur des bits indicateurs du second paquet de données indique que la charge utile comprise dans le second paquet de données comprenant les bits indicateurs dont la valeur est la première valeur est un fragment de départ de la seconde trame de données ;
une deuxième valeur des bits indicateurs du second paquet de données indique que la charge utile comprise dans le second paquet de données comprenant les bits indicateurs dont la valeur est la deuxième valeur est un fragment intermédiaire de la seconde trame de données ;
une troisième valeur des bits indicateurs du second paquet de données indique que la charge utile comprise dans le second paquet de données comprenant les bits indicateurs dont la valeur est la troisième valeur est un fragment de fin de la seconde trame de données ;
une quatrième valeur des bits indicateurs du second paquet de données indique que la charge utile comprise dans le second paquet de données comprenant les bits indicateurs dont la valeur est la quatrième valeur transporte des informations ne constituant pas des données.

5. Procédé selon la revendication 1 ou 2, dans lequel les bits indicateurs d'un 1^{er} premier paquet de données parmi les N1 premiers paquets de données indiquent que le 1^{er} premier paquet de données est un fragment de début, les bits indicateurs d'un 2^{ième} à un N1^{ième} premiers paquets de données parmi les N1 premiers paquets de données et d'un 1^{er} à un (N2-1)^{ième} premiers paquets de données parmi les N2 premiers paquets de données indiquent que les premiers paquets de données sont des fragments intermédiaires, et les bits indicateurs d'un N2^{ième} premier paquet de données parmi les N2 premiers paquets de données indiquent que le N2^{ième} premier paquet de données est un fragment de fin ; et
les bits indicateurs d'un 1^{er} second paquet de données parmi les M seconds paquets de données indiquent que le 1^{er} second paquet de données est un fragment de départ, les bits indicateurs d'un 2^{ième} à un (M-1)^{ième} seconds paquets de données indiquent que les second paquets de données sont des fragments intermédiaires, et les bits indicateurs d'un M^{ième} second paquet de données indiquent que le M^{ième} second paquet de données est un fragment de fin.

6. Procédé selon l'une quelconque des revendications 1 à 5, dans lequel le procédé comprend également :
l'envoi de K cinquièmes paquets de données, dans lequel le cinquième paquet de données comprend des bits indicateurs et une charge utile, les bits indicateurs du cinquième paquet de données indiquent que le cinquième paquet de données contient des informations ne constituant pas des données, la charge utile du cinquième paquet de données transporte un fragment des informations ne constituant pas des données, et K est un entier supérieur à 0.

7. Procédé de transmission d'informations, dans lequel le procédé comprend :
la réception (S101) de N1 premiers paquets de données dans une première trame de données ;
la réception (S102) de M seconds paquets de données dans une seconde trame de données avant que N2 premiers paquets de données dans la première trame de données ne soient reçus (S103), dans lequel la première trame de données comprend les N1 premiers paquets de données et les N2 premiers paquets de données, et N1, N2 et M sont des entiers positifs ;
la détermination (S104) de la première trame de données sur la base des N1 premiers paquets de données et des N2 premiers paquets de données ; et
la détermination (S105) de la seconde trame de données sur la base des M seconds paquets de données, dans lequel une priorité de la seconde trame de données est supérieure à une priorité de la première trame de données ;
**caractérisé en ce que**
le premier paquet de données comprend des bits indicateurs et une charge utile, dans lequel la charge utile du premier paquet de données transporte l'un d'un fragment de départ, d'un fragment intermédiaire ou d'un fragment de fin de la première trame de données, et les bits indicateurs du premier paquet de données indiquent l'un du fragment de départ, du fragment intermédiaire ou du fragment de fin de la première trame de données ; et
le second paquet de données comprend des bits indicateurs et une charge utile, dans lequel la charge utile du second paquet de données transporte l'un d'un fragment de départ, d'un fragment intermédiaire ou d'un fragment de fin de la seconde trame de données, et les bits indicateurs du second paquet de données indiquent l'un du fragment de départ, du fragment intermédiaire ou du fragment de fin de la première trame de données.

8. Procédé selon la revendication 7, dans lequel
une première valeur des bits indicateurs du premier paquet de données indique que la charge utile comprise dans le premier paquet de données comprenant les bits indicateurs dont la valeur est la première valeur est un fragment de départ de la première trame de données ;
une deuxième valeur des bits indicateurs du premier paquet de données indique que la charge utile comprise dans le premier paquet de données comprenant les bits indicateurs dont la valeur est la deuxième valeur est un fragment intermédiaire de la première trame de données ;
une troisième valeur des bits indicateurs du premier paquet de données indique que la charge utile comprise dans le premier paquet de données comprenant les bits indicateurs dont la valeur est la troisième valeur est un fragment de fin de la première trame de données ;
une quatrième valeur des bits indicateurs du premier paquet de données indique que la charge utile comprise dans le premier paquet de données comprenant les bits indicateurs dont la valeur est la quatrième valeur transporte des informations ne constituant pas des données.

9. Procédé selon la revendication 7 ou 8, dans lequel
une première valeur des bits indicateurs du second paquet de données indique que la charge utile comprise dans le second paquet de données comprenant les bits indicateurs dont la valeur est la première valeur est un fragment de départ de la seconde trame de données ;
une deuxième valeur des bits indicateurs du second paquet de données indique que la charge utile comprise dans le second paquet de données comprenant les bits indicateurs dont la valeur est la deuxième valeur est un fragment intermédiaire de la seconde trame de données ;
une troisième valeur des bits indicateurs du second paquet de données indique que la charge utile comprise dans le second paquet de données comprenant les bits indicateurs dont la valeur est la troisième valeur est un fragment de fin de la seconde trame de données ;
une quatrième valeur des bits indicateurs du second paquet de données indique que la charge utile comprise dans le second paquet de données comprenant les bits indicateurs dont la valeur est la quatrième valeur transporte des informations ne constituant pas des données.

10. Procédé selon l'une quelconque des revendications 7 à 9, dans lequel les bits indicateurs d'un 1^{er} premier paquet de données parmi les N1 premiers paquets de données indiquent que le 1^{er} premier paquet de données est un fragment de début, les bits indicateurs d'un 2^{ième} à un N1^{ième} premiers paquets de données parmi les N1 premiers paquets de données et d'un 1^{er} à un (N2-1)^{ième} premiers paquets de données parmi les N2 premiers paquets de données indiquent que les premiers paquets de données sont des fragments intermédiaires, et les bits indicateurs d'un N2^{ième} premier paquet de données parmi les N2 premiers paquets de données indiquent que le N2^{ième} premier paquet de données est un fragment de fin ; et
les bits indicateurs d'un 1^{er} second paquet de données parmi les M seconds paquets de données indiquent que le 1^{er} second paquet de données est un fragment de départ, les bits indicateurs d'un 2^{ième} à un (M-1)^{ième} seconds paquets de données indiquent que les second paquets de données sont des fragments intermédiaires, et les bits indicateurs d'un M^{ième} second paquet de données indiquent que le M^{ième} second paquet de données est un fragment de fin.

11. Procédé selon l'une quelconque des revendications 7 à 10, dans lequel le procédé comprend également :
la réception de K cinquièmes paquets de données, dans lequel le cinquième paquet de données comprend des bits indicateurs et une charge utile, les bits indicateurs du cinquième paquet de données indiquent que le cinquième paquet de données contient des informations ne constituant pas des données, la charge utile du cinquième paquet de données transporte un fragment des informations ne constituant pas des données, et K est un entier supérieur à 0.

12. Appareil de transmission d'informations, dans lequel l'appareil est configuré pour réaliser le procédé selon l'une quelconque des revendications 1 à 6.

13. Appareil de transmission d'informations, dans lequel l'appareil est configuré pour réaliser le procédé selon l'une quelconque des revendications 7 à 11.

14. Support de stockage lisible par ordinateur, dans lequel le support de stockage lisible par ordinateur stocke un programme ou des instructions, et lorsque le programme ou les instructions sont lus et exécutés par un ou plusieurs processeurs, le procédé selon l'une quelconque des revendications 1 à 6 est mis en œuvre, ou lorsque le programme ou les instructions sont lus et exécutés par un ou plusieurs processeurs, le procédé selon l'une quelconque des revendications 7 à 11 est mis en œuvre.

15. Véhicule, dans lequel le véhicule comprend un premier dispositif et/ou un second dispositif, le premier dispositif est l'appareil de transmission d'informations selon la revendication 12, et le second dispositif est l'appareil de transmission d'informations selon la revendication 13.

16. Système de transmission d'informations, dans lequel le système comprend un premier dispositif et un second dispositif, dans lequel le premier dispositif est l'appareil de transmission d'informations selon la revendication 12 et le second dispositif est l'appareil de transmission d'informations selon la revendication 13.
